# EUROPEAN PATENT APPLICATION

(11) **EP 4 593 300 A1**
(43) Date of publication of application: **30.07.2025**
(21) Application number: 22961643.8
(22) Date of filing: 10.10.2022
(51) Int. Cl.: H04B 7/0456, H04W 72/04, H04L 27/00

(54) **COMMUNICATION METHOD, APPARATUS, CHIP SYSTEM, STORAGE MEDIUM AND COMPUTER PROGRAM PRODUCT**

(71) Applicant: Huawei Technologies Co., Ltd., Shenzhen, Guangdong 518129 (CN)
(72) Inventor: ZHANG, Zhang, Shenzhen, Guangdong 518129 (CN); WANG, Fan, Shenzhen, Guangdong 518129 (CN)
(74) Representative: Thun, Clemens
(86) International application number: PCT/CN2022/124415
(87) International publication number: WO 2024/077448

(57) **Abstract**

A communication method and apparatus, a chip system, a storage medium, and a computer program product are disclosed and relate to the communication field, to increase a system capacity. In this application, a first apparatus sends first information to a second apparatus. The first information includes information indicating a first precoding matrix, and the first precoding matrix is a candidate precoding matrix to be used by the second apparatus to precode a first data flow. The first apparatus sends second information to the second apparatus. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow. Because the first apparatus may separately feed back the candidate precoding matrix corresponding to the first data flow and the candidate precoding matrix corresponding to the second data flow, a solution of respectively precoding the first data flow and the second data flow based on two precoding matrices may be enabled, to increase a system capacity.

## Description

### TECHNICAL FIELD

This application relates to the communication field, and in particular, to a communication method and apparatus, a chip system, a storage medium, and a computer program product.

### BACKGROUND

In a wireless communication system, after obtaining channel state information (Channel State Information, CSI), a transmit end may transmit a signal by using a precoding matrix, to improve entire system performance. For example, a signal at a receive end may be represented as y=HVs+n. Herein, y represents the signal at the receive end, H represents the channel state information, V represents the precoding matrix, s represents the signal, and n represents noise. Usually, both the transmit end and the receive end store a set including the precoding matrix V. Once the receive end feeds back a precoding matrix indicator (Precoding Matrix Indicator, PMI), and the transmit end may obtain the precoding matrix required for transmitting the signal.

In consideration of practicality, for example, calculation complexity and a feedback information amount, precoding used in a multiple input multiple output (Multi Input Multi Output, MIMO) system is usually linear precoding. A main idea of linear precoding is to map different flows to mutually (nearly) orthogonal subspace, to implement decoupling of data between different flows. However, in an actual scenario, such a communication mode brings some problems, for example, a small system capacity. Based on this, a communication solution is urgently needed, to increase the system capacity.

### SUMMARY

This application provides a communication method and apparatus, a chip system, a storage medium, and a computer program product, to increase a system capacity.

**According to a first aspect,** an embodiment of this application provides a communication method. The communication method may be performed by a first apparatus. The first apparatus used in this application may be a terminal device or a network device, or a module, a unit, or a chip (system) in the terminal device or the network device.

In the method, the first apparatus sends first information to a second apparatus. The first information includes information indicating a first precoding matrix, and the first precoding matrix is a candidate precoding matrix to be used by the second apparatus to precode a first data flow. The first apparatus sends second information to the second apparatus. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

It can be learned from the foregoing content that, because there is an intersection set between the time domain resource of the first data flow and the time domain resource of the second data flow, the first apparatus may separately feed back two precoding matrices based on a reference signal of the second apparatus, and the two precoding matrices are respectively used to precode the first data flow and the second data flow, a solution of respectively precoding the first data flow and the second data flow based on the two precoding matrices may be enabled. In addition, because the solution of respectively precoding the first data flow and the second data flow based on the two precoding matrices is enabled in this application, the first apparatus and the second apparatus may communicate based on the first data flow and the second data flow, to increase a system capacity.

In a possible implementation, the first information further includes a modulation and coding scheme (modulation and coding scheme, MCS) corresponding to the first precoding matrix. In this way, when determining precoding information for the first data flow, the second apparatus may refer to the MCS in the first information, so that the second apparatus can determine more proper precoding information. The MCS includes information such as a quadrature amplitude modulation (quadrature amplitude modulation, QAM) modulation order and/or a code rate.

In a possible implementation, the first information further includes rank indication information corresponding to the first precoding matrix. In this way, when determining the precoding information for the first data flow, the second apparatus may refer to the rank indication information in the first information, so that the second apparatus can determine more proper precoding information.

In a possible implementation, the second information further includes an MCS corresponding to the second precoding matrix. In this way, when determining precoding information for the second data flow, the second apparatus may refer to the MCS in the second information, so that the second apparatus can determine more proper precoding information.

In a possible implementation, the second information further includes rank indication information corresponding to the second precoding matrix. In this way, when determining the precoding information for the second data flow, the second apparatus may refer to the rank indication information in the second information, so that the second apparatus can determine more proper precoding information.

Bandwidth corresponding to the first precoding matrix and bandwidth corresponding to the second precoding matrix may be separately set. The bandwidth corresponding to the first precoding matrix may be different from the bandwidth corresponding to the second precoding matrix. For example, the bandwidth corresponding to the first precoding matrix is set to a mode 1 in a codebook mode defined in new radio (new radio, NR), and the bandwidth corresponding to the second precoding matrix is set to a mode 2 in the codebook mode defined in NR. A beam in the mode 1 is a wideband mode, and a beam in the mode 2 is a wideband plus subband mode. In a possible implementation, a codebook level quantity corresponding to the first precoding matrix and a codebook level quantity corresponding to the second precoding matrix may be separately set. The codebook level quantity corresponding to the first precoding matrix may be different from the codebook level quantity corresponding to the second precoding matrix. For example, the second precoding matrix may correspond to a two-level codebook, and the first precoding matrix may correspond to a one-level codebook. In this way, a common data flow corresponds to fewer beams, and a private data flow corresponds to more beams. Power consumption can be reduced. In addition, directivity of the private data flow can be enhanced, so that energy of the beams corresponding to the private data flow is more concentrated, to improve communication performance.

A precoding resource block group corresponding to the first precoding matrix and a precoding resource block group corresponding to the second precoding matrix may be separately set. The precoding resource block group corresponding to the first precoding matrix may be different from the precoding resource block group corresponding to the second precoding matrix. For example, the precoding resource block group corresponding to the first precoding matrix may be greater than the precoding resource block group corresponding to the second precoding matrix. It can be learned that, a large quantity of physical resource blocks are used for a precoding matrix corresponding to the common data flow. Therefore, a quantity of precoding matrices that need to be used for the common data flow can be reduced, to reduce a quantity of precoding matrices that correspond to the common data flow and that need to be fed back by the first apparatus side, and reduce feedback overheads. A small quantity of physical resource blocks are used for a precoding matrix corresponding to the private data flow. Because different physical resource blocks correspond to different channels, the precoding matrix used for the private data flow can better match a channel condition corresponding to the private data flow, to improve communication performance.

In a possible implementation, the first information includes information indicating a plurality of first precoding matrices, and at least two of the plurality of first precoding matrices are different. Because the first data flow is a common data flow of the first apparatus, and the common has a capability of carrying data of the first apparatus and another apparatus (for example, a third apparatus), the another apparatus (for example, the third apparatus) may also feed back a precoding matrix corresponding to the common data flow to the second apparatus. Therefore, when the first apparatus feeds back the plurality of first precoding matrices to the second apparatus, the second apparatus determines that options for a precoding matrix of the first data flow increase, so that the second apparatus can select a better precoding matrix of the first data flow for the first apparatus and the another apparatus (for example, the third apparatus).

In a possible implementation, the second information includes information indicating a plurality of second precoding matrices, and at least two of the plurality of second precoding matrices are different. Because the first apparatus feeds back the plurality of second precoding matrices to the second apparatus, the second apparatus determines that options for a precoding matrix of the second data flow increase, so that the second apparatus can select a better precoding matrix for the second data flow.

In a possible implementation, the first precoding matrix is a precoding matrix in a first precoding matrix set, and the second precoding matrix is a precoding matrix in a second precoding matrix set. The first precoding matrix set is a subset of the second precoding matrix set. Because the first precoding matrix set is a subset of the second precoding matrix set, a quantity of precoding matrix sets that need to be defined can be reduced, to reduce signaling overheads and reduce storage space occupied by a precoding matrix.

In a possible implementation, the first precoding matrix is a precoding matrix in the first precoding matrix set, and the second precoding matrix is a precoding matrix in the second precoding matrix set. A quantity of precoding matrices included in the first precoding matrix set is different from or the same as a quantity of precoding matrices included in the second precoding matrix set. In this way, solution flexibility can be improved.

In a possible implementation, the first apparatus receives first trigger information. The first trigger information triggers the first apparatus to feed back information about the candidate precoding matrix of the first data flow. The first apparatus sends the first information to the second apparatus based on the first trigger information. In this way, when determining, according to an actual requirement of the second apparatus, that the first apparatus needs to feed back a candidate precoding matrix of the common data flow of the first apparatus, the second apparatus may send the first trigger information to the first apparatus, to trigger the first apparatus to feed back the candidate precoding matrix of the common data flow of the first apparatus. In this way, compared with a solution in which the first apparatus periodically feeds back the candidate precoding matrix of the common data flow of the first apparatus, this solution can reduce signaling consumption.

In a possible implementation, the first apparatus receives second trigger information. The second trigger information triggers the first apparatus to feed back information about the candidate precoding matrix of the second data flow. The first apparatus sends the second information to the second apparatus based on the second trigger information. In this way, when determining, according to an actual requirement of the second apparatus, that the first apparatus needs to feed back a candidate precoding matrix of the private data flow of the first apparatus, the second apparatus may send the second trigger information to the first apparatus, to trigger the first apparatus to feed back the candidate precoding matrix of the private data flow of the first apparatus. In this way, compared with a solution in which the first apparatus periodically feeds back the candidate precoding matrix of the private data flow of the first apparatus, this solution can reduce signaling consumption.

In a possible implementation, the first apparatus periodically sends, by using first duration as a periodicity, information indicating the candidate precoding matrix of the first data flow. In this embodiment of this application, when the first apparatus periodically sends the information indicating the candidate precoding matrix of the first data flow, one piece of the information that is fed back by the first apparatus and that indicates the candidate precoding matrix of the first data flow may be the first information. It may alternatively be understood that the first information is information that is sent by the first apparatus in one periodicity and that indicates the candidate precoding matrix of the first data flow. The first apparatus may periodically feed back information about the candidate precoding matrix of the common data flow of the first apparatus. In this way, when the second apparatus needs to determine the precoding matrix of the common data flow of the first apparatus, the second apparatus can select the precoding matrix based on a newly received candidate precoding matrix. In a possible implementation, the first apparatus may feed back the information about the candidate precoding matrix of the common data flow of the first apparatus at a low frequency. In this case, overheads caused by feedback can be reduced.

In a possible implementation, the first apparatus periodically sends, by using second duration as a periodicity, information indicating the candidate precoding matrix of the second data flow. In this embodiment of this application, when the first apparatus periodically sends the information indicating the candidate precoding matrix of the second data flow, one piece of the information that is fed back by the first apparatus and that indicates the candidate precoding matrix of the second data flow may be the second information. It may alternatively be understood that the second information is information that is sent by the first apparatus in one periodicity and that indicates the candidate precoding matrix of the second data flow. The first apparatus may periodically feed back information about the candidate precoding matrix of the private data flow of the first apparatus. In this way, when the second apparatus needs to determine the precoding matrix of the private data flow of the first apparatus, the second apparatus can select the precoding matrix based on a newly received candidate precoding matrix.

**According to a second aspect,** an embodiment of this application provides a communication method. The communication method may be performed by a second apparatus. The second apparatus used in this application may be a terminal device or a network device, or a module, a unit, or a chip (system) in the terminal device or the network device.

In the method, the second apparatus receives first information from a first apparatus. The first information includes information indicating a first precoding matrix, and the first precoding matrix is a candidate precoding matrix to be used by the second apparatus to precode a first data flow. The second apparatus receives second information from the first apparatus. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

It can be learned from the foregoing content that, because there is an intersection set between the time domain resource of the first data flow and the time domain resource of the second data flow, the first apparatus may separately feed back two precoding matrices based on a reference signal of the second apparatus, and the two precoding matrices are respectively used to precode the first data flow and the second data flow, a solution of respectively precoding the first data flow and the second data flow based on the two precoding matrices may be enabled. In addition, because the solution of respectively precoding the first data flow and the second data flow based on the two precoding matrices is enabled in this application, the first apparatus and the second apparatus may communicate based on the first data flow and the second data flow, to increase a system capacity.

In a possible implementation, the first information further includes a modulation and coding scheme corresponding to the first precoding matrix and/or rank indication information corresponding to the first precoding matrix.

For related descriptions and beneficial effects, refer to related descriptions in the first aspect and the possible implementations of the first aspect. Details are not described herein again.

In a possible implementation, the second information further includes a modulation and coding scheme corresponding to the second precoding matrix and/or rank indication information corresponding to the second precoding matrix.

For related descriptions and beneficial effects, refer to related descriptions in the first aspect and the possible implementations of the first aspect. Details are not described herein again.

In a possible implementation, bandwidth corresponding to the first precoding matrix is different from bandwidth corresponding to the second precoding matrix.

For related descriptions and beneficial effects, refer to related descriptions in the first aspect and the possible implementations of the first aspect. Details are not described herein again.

In a possible implementation, a codebook level quantity corresponding to the first precoding matrix is different from a codebook level quantity corresponding to the second precoding matrix.

For related descriptions and beneficial effects, refer to related descriptions in the first aspect and the possible implementations of the first aspect. Details are not described herein again.

In a possible implementation, a quantity of precoding resource block groups corresponding to the first precoding matrix is different from a quantity of precoding resource block groups corresponding to the second precoding matrix.

For related descriptions and beneficial effects, refer to related descriptions in the first aspect and the possible implementations of the first aspect. Details are not described herein again.

In a possible implementation, the first information includes information indicating a plurality of first precoding matrices, and at least two of the plurality of first precoding matrices are different.

For related descriptions and beneficial effects, refer to related descriptions in the first aspect and the possible implementations of the first aspect. Details are not described herein again.

In a possible implementation, the second information includes information indicating a plurality of second precoding matrices, and at least two of the plurality of second precoding matrices are different.

For related descriptions and beneficial effects, refer to related descriptions in the first aspect and the possible implementations of the first aspect. Details are not described herein again.

In a possible implementation, the first precoding matrix is a precoding matrix in the first precoding matrix set, and the second precoding matrix is a precoding matrix in the second precoding matrix set. The first precoding matrix set is a subset of the second precoding matrix set.

For related descriptions and beneficial effects, refer to related descriptions in the first aspect and the possible implementations of the first aspect. Details are not described herein again.

In a possible implementation, the first precoding matrix is a precoding matrix in the first precoding matrix set, and the second precoding matrix is a precoding matrix in the second precoding matrix set. A quantity of precoding matrices included in the first precoding matrix set is different from a quantity of precoding matrices included in the second precoding matrix set.

For related descriptions and beneficial effects, refer to related descriptions in the first aspect and the possible implementations of the first aspect. Details are not described herein again.

In a possible implementation, before the second apparatus receives the first information from the first apparatus, the method further includes: The second apparatus sends first trigger information to the first apparatus. The first trigger information triggers the first apparatus to feed back information about the candidate precoding matrix of the first data flow. In this way, when determining, according to an actual requirement of the second apparatus, that the first apparatus needs to feed back a candidate precoding matrix of the common data flow of the first apparatus, the second apparatus may send the first trigger information to the first apparatus, to trigger the first apparatus to feed back the candidate precoding matrix of the common data flow of the first apparatus. In this way, compared with a solution in which the first apparatus periodically feeds back the candidate precoding matrix of the common data flow of the first apparatus, this solution can reduce signaling consumption.

In a possible implementation, before the second apparatus receives the second information from the first apparatus, the method further includes: The second apparatus sends second trigger information to the first apparatus. The second trigger information triggers the first apparatus to feed back information about the candidate precoding matrix of the second data flow.

In this way, when determining, according to an actual requirement of the second apparatus, that the first apparatus needs to feed back a candidate precoding matrix of the private data flow of the first apparatus, the second apparatus may send the second trigger information to the first apparatus, to trigger the first apparatus to feed back the candidate precoding matrix of the private data flow of the first apparatus. In this way, compared with a solution in which the first apparatus periodically feeds back the candidate precoding matrix of the private data flow of the first apparatus, this solution can reduce signaling consumption.

In a possible implementation, the second apparatus periodically receives, by using first duration as a periodicity, information indicating the candidate precoding matrix of the first data flow. In this embodiment of this application, when the second apparatus periodically receives the information indicating the candidate precoding matrix of the first data flow, one piece of the information that is received by the second apparatus and that indicates the candidate precoding matrix of the first data flow may be the first information. It may alternatively be understood that the first information is information that is received by the second apparatus in one periodicity and that indicates the candidate precoding matrix of the first data flow. In other words, the first apparatus may periodically feed back information about the candidate precoding matrix of the common data flow of the first apparatus. In this way, when the second apparatus needs to determine the precoding matrix of the common data flow of the first apparatus, the second apparatus can select the precoding matrix based on a newly received candidate precoding matrix. In a possible implementation, the first apparatus may feed back the information about the candidate precoding matrix of the common data flow of the first apparatus at a low frequency. In this case, overheads caused by feedback can be reduced.

In a possible implementation, the second apparatus periodically receives, by using second duration as a periodicity, information indicating the candidate precoding matrix of the second data flow. In this embodiment of this application, when the second apparatus periodically receives the information indicating the candidate precoding matrix of the second data flow, one piece of the information that is received by the second apparatus and that indicates the candidate precoding matrix of the second data flow may be the second information. It may alternatively be understood that the second information is information that is received by the second apparatus in one periodicity and that indicates the candidate precoding matrix of the second data flow. In other words, the first apparatus may periodically feed back information about the candidate precoding matrix of the private data flow of the first apparatus. In this way, when the second apparatus needs to determine the precoding matrix of the private data flow of the first apparatus, the second apparatus can select the precoding matrix based on a newly received candidate precoding matrix.

**According to a third aspect,** an embodiment of this application provides a communication method. The communication method may be performed by a first apparatus. The first apparatus used in this application may be a terminal device or a network device, or a module, a unit, or a chip (system) in the terminal device or the network device.

In the method, the first apparatus receives third information from a second apparatus, and the first apparatus receives a first data flow and a second data flow from the second apparatus based on the third information. There is an intersection set between a time domain resource of the first data flow and a time domain resource of the second data flow. The third information includes at least one of the following content: information indicating a time-frequency resource occupied by the first data flow; information indicating a modulation and coding scheme of the first data flow; location indication information indicating a location of data of the first apparatus in the first data flow; or a demodulation reference signal (demodulation reference signal, DMRS) port corresponding to the first data flow.

For example, the first data flow has a capability of carrying data of a plurality of apparatuses (for example, the first apparatus and another apparatus), and the second data flow may be the data of the first apparatus. In addition, because there is an intersection set between the time domain resource of the first data flow and the time domain resource of the second data flow, the data of the first apparatus may be sent through two data flows. Such a communication solution of sending data of one apparatus through a plurality of data flows can improve a system capacity. It can be learned that the solution provided in this embodiment of this application can enable a solution of separately communicating with the first apparatus based on the first data flow and the second data flow, to increase a system capacity.

Further, the first data flow has the capability of carrying the data of the plurality of apparatuses (for example, the first apparatus and the another apparatus), and in this embodiment of this application, the third information may indicate related information of the first data flow. Therefore, the first apparatus may quickly obtain the first data flow from a received signal, and may also quickly obtain related information of the first apparatus from the first data flow, to improve communication efficiency of communication between the first apparatus and the second apparatus based on the first data flow and the second data flow.

In a possible implementation, the first data flow is a common data flow. It can be learned that, in this embodiment of this application, the second apparatus may indicate related information of the common data flow to the first apparatus based on the third information, so that the first apparatus can obtain the common data flow based on the third information more efficiently and conveniently. In addition, because the common data flow has a capability of carrying data of a plurality of apparatuses, the second apparatus may further indicate a specific location of the data of the first apparatus in the common data flow to the first apparatus based on the third information, so that the first apparatus can more efficiently and more conveniently obtain, based on the third information, information that is of the first apparatus and that is carried in the common data flow.

In a possible implementation, the first data flow includes the data of the first apparatus, and the location indication information includes group identification information of a logical bit group corresponding to the data of the first apparatus. The logical bit group includes one or more consecutive logical bits, and the logical bit group has a mapping relationship with one physical bit, a plurality of consecutive physical bits, or a plurality of inconsecutive physical bits. In this way, a quantity of bits occupied by the location indication information of the second apparatus can be reduced, to reduce overheads.

In a possible implementation, one logical bit has a mapping relationship with one or more physical bits. Therefore, solution flexibility can be improved.

In a possible implementation, the third information further includes identification information indicating a layer onto which a codeword corresponding to data of the first data flow is mapped. In this way, the first apparatus may parse the first data flow based on the identification information of the layer corresponding to the first data flow, to reduce difficulty in parsing the first data flow by the first apparatus.

In a possible implementation, the data of the first data flow corresponds to one or more codewords. In a possible implementation, one of the one or more codewords corresponding to the data of the first data flow is mapped onto one or more layers. In this way, solution flexibility can be improved.

In a possible implementation, data of the second data flow corresponds to one or more codewords. In a possible implementation, one of the one or more codewords of the second data flow is mapped onto one or more layers. In this way, solution flexibility can be improved.

In a possible implementation, the codeword corresponding to the data of the first data flow is different from the codeword corresponding to the data of the second data flow. In this way, difficulty in parsing data by the first apparatus can be reduced. In a possible implementation, a layer onto which the codeword corresponding to the data of the first data flow is mapped is different from a layer onto which the codeword corresponding to the data of the second data flow is mapped. In this way, difficulty in parsing data by the first apparatus can be reduced.

In a possible implementation, the first apparatus receives fourth information from the second apparatus. The fourth information includes at least one of the following content: information indicating a time-frequency resource occupied by the second data flow; information indicating a modulation and coding scheme of the second data flow; information indicating a DMRS port corresponding to the second data flow; or identification information indicating a layer onto which a codeword corresponding to the data of the first apparatus in the second data flow is mapped. In a possible implementation, the second data flow is a private data flow of the first apparatus. When the first apparatus receives the fourth information, the first apparatus may determine related information of the second data flow based on the fourth information, and then may obtain information in the second data flow from received data.

In a possible implementation, the first apparatus receives information that is from the second apparatus and that indicates that the first data flow includes the data of the first apparatus. The first apparatus obtains the data of the first apparatus from the first data flow based on the indication that the first data flow includes the data of the first apparatus. In this way, if the first apparatus determines that the first data flow does not include the data of the first apparatus, the first apparatus does not need to attempt to obtain the data of the first apparatus from the first data flow, to reduce a workload of the first apparatus and reduce power consumption of the first apparatus.

In a possible implementation, the information indicating that the first data flow includes the data of the first apparatus is carried in downlink control information (downlink control information, DCI). In this way, signaling overheads can be reduced. This is more compatible with the conventional technology.

In a possible implementation, the first apparatus receives first DCI, and when determining that the first DCI is scrambled by using a first radio network temporary identifier (radio network temporary identity, RNTI), the first apparatus determines that the first data flow includes the data of the first apparatus. In this implementation, whether the first data flow includes the data of the first apparatus may be implicitly indicated, so that an amount of information sent by the second apparatus can be reduced, to further improve data transmission efficiency.

In a possible implementation, the first apparatus receives first DCI, and when determining that the first DCI is scrambled by using a second RNTI, the first apparatus determines that the first data flow does not include the data of the first apparatus.

In this implementation, whether the first data flow includes the data of the first apparatus may be implicitly indicated, so that an amount of information sent by the second apparatus can be reduced, to further improve data transmission efficiency.

In a possible implementation, the first apparatus receives a target data flow from the second apparatus based on the third information. The target data flow includes the first data flow. The first apparatus receives information that is from the second apparatus and that indicates that the target data flow includes the second data flow. The second data flow is a data flow of the first apparatus. The first apparatus obtains data of the second data flow from the target data flow based on the information indicating that the target data flow includes the second data flow. The first apparatus determines that the target data flow does not include the second data flow, and then does not need to attempt to obtain the private data flow of the first apparatus from the target data flow, to reduce a workload of the first apparatus and reduce power consumption of the first apparatus.

In a possible implementation, the information indicating that the target data flow includes the second data flow is carried in the DCI. In this way, signaling overheads can be reduced. This is more compatible with the conventional technology.

In a possible implementation, the first apparatus receives a target data flow from the second apparatus based on the third information. The target data flow includes the first data flow. The first apparatus receives second DCI. When determining that the second DCI is scrambled by using a third RNTI, the first apparatus determines that the target data flow includes information of the second data flow. In this way, whether the target data flow includes the second data flow may be implicitly determined. In this implementation, an amount of information sent by the second apparatus may be reduced, to further improve data transmission efficiency.

In a possible implementation, the first apparatus receives a target data flow from the second apparatus based on the third information. The target data flow includes the first data flow. When determining that the second DCI is scrambled by using a fourth RNTI, the first apparatus determines that the target data flow does not include information of the second data flow.

In this way, whether the target data flow includes the second data flow may be implicitly determined. In this implementation, an amount of information sent by the second apparatus may be reduced, to further improve data transmission efficiency.

In a possible implementation, the third information is carried in specified DCI and/or group DCI of the first apparatus. In this way, no new piece of signaling needs to be set to carry the third information, to reduce signaling overheads. This is more compatible with the conventional technology.

**According to a fourth aspect,** an embodiment of this application provides a communication method. The communication method may be performed by a second apparatus. The second apparatus used in this application may be a terminal device or a network device, or a module, a unit, or a chip (system) in the terminal device or the network device.

In the method, the second apparatus sends third information to a first apparatus, and the second apparatus sends a first data flow and a second data flow to the first apparatus. There is an intersection set between a time domain resource of the first data flow and a time domain resource of the second data flow. The third information includes at least one of the following content: information indicating a time-frequency resource occupied by the first data flow; information indicating a modulation and coding scheme of the first data flow; location indication information indicating a location of data of the first apparatus in the first data flow; or a DMRS port corresponding to the first data flow.

For example, the first data flow has a capability of carrying data of a plurality of apparatuses (for example, the first apparatus and another apparatus), and the second data flow may be the data of the first apparatus. In addition, because there is an intersection set between the time domain resource of the first data flow and the time domain resource of the second data flow, the data of the first apparatus may be sent through two data flows. Such a communication solution of sending data of one apparatus through a plurality of data flows can improve a system capacity. It can be learned that the solution provided in this embodiment of this application can enable a solution of separately communicating with the first apparatus based on the first data flow and the second data flow, to increase a system capacity.

Further, the first data flow has the capability of carrying the data of the plurality of apparatuses (for example, the first apparatus and the another apparatus), and in this embodiment of this application, the third information may indicate related information of the first data flow. Therefore, the first apparatus may quickly obtain the first data flow from a received signal, and may also quickly obtain related information of the first apparatus from the first data flow, to improve communication efficiency of communication between the first apparatus and the second apparatus based on the first data flow and the second data flow.

In a possible implementation, the first data flow is a common data flow. For related content and beneficial effects, refer to the content of the third aspect and the possible implementations of the third aspect. Details are not described herein again.

In a possible implementation, the first data flow includes the data of the first apparatus, and the location indication information includes group identification information of a logical bit group corresponding to the data of the first apparatus. The logical bit group includes one or more consecutive logical bits, and the logical bit group has a mapping relationship with one physical bit, a plurality of consecutive physical bits, or a plurality of inconsecutive physical bits. For related content and beneficial effects, refer to the content of the third aspect and the possible implementations of the third aspect. Details are not described herein again.

In a possible implementation, one logical bit has a mapping relationship with one or more physical bits. For related content and beneficial effects, refer to the content of the third aspect and the possible implementations of the third aspect. Details are not described herein again.

In a possible implementation, the third information further includes identification information indicating a layer onto which a codeword corresponding to data of the first data flow is mapped. For related content and beneficial effects, refer to the content of the third aspect and the possible implementations of the third aspect. Details are not described herein again.

In a possible implementation, the data of the first data flow corresponds to one or more codewords, and/or one of the one or more codewords corresponding to the data of the first data flow is mapped onto one or more layers. For related content and beneficial effects, refer to the content of the third aspect and the possible implementations of the third aspect. Details are not described herein again.

In a possible implementation, data of the second data flow corresponds to one or more codewords, and/or one of the one or more codewords of the second data flow is mapped onto one or more layers. For related content and beneficial effects, refer to the content of the third aspect and the possible implementations of the third aspect. Details are not described herein again.

In a possible implementation, the codeword corresponding to the data of the first data flow is different from the codeword corresponding to the data of the second data flow. In a possible implementation, a layer onto which the codeword corresponding to the data of the first data flow is mapped is different from a layer onto which the codeword corresponding to the data of the second data flow is mapped. For related content and beneficial effects, refer to the content of the third aspect and the possible implementations of the third aspect. Details are not described herein again.

In a possible implementation, the second apparatus sends fourth information to the first apparatus. The fourth information includes at least one of the following content: information indicating a time-frequency resource occupied by the second data flow; information indicating a modulation and coding scheme of the second data flow; information indicating a DMRS port corresponding to the second data flow; or identification information indicating a layer onto which a codeword corresponding to the data of the first apparatus in the second data flow is mapped.

When the first apparatus receives the fourth information, the first apparatus may determine related information of the second data flow based on the fourth information, and then may obtain information in the second data flow from received data.

In a possible implementation, the second apparatus sends, to the first apparatus, information indicating that the first data flow includes the data of the first apparatus. In this way, if the first apparatus determines that the first data flow does not include the data of the first apparatus, the first apparatus does not need to attempt to obtain the data of the first apparatus from the first data flow, to reduce a workload of the first apparatus and reduce power consumption of the first apparatus.

In a possible implementation, the information indicating that the first data flow includes the data of the first apparatus is carried in DCI. For related content and beneficial effects, refer to the content of the third aspect and the possible implementations of the third aspect. Details are not described herein again.

In a possible implementation, the second apparatus sends first DCI to the first apparatus. The first DCI is scrambled by using a first RNTI, and the first RNTI indicates that the first data flow includes the data of the first apparatus.

In this implementation, whether the first data flow includes the data of the first apparatus may be implicitly indicated, so that an amount of information sent by the second apparatus can be reduced, to further improve data transmission efficiency.

In a possible implementation, the second apparatus sends first DCI to the first apparatus. The first DCI is scrambled by using a second RNTI, and the second RNTI indicates that the first data flow does not include the data of the first apparatus.

In this implementation, whether the first data flow includes the data of the first apparatus may be implicitly indicated, so that an amount of information sent by the second apparatus can be reduced, to further improve data transmission efficiency.

In a possible implementation, the second apparatus sends a target data flow to the first apparatus. The target data flow includes the first data flow. The second apparatus sends, to the first apparatus, information indicating that the target data flow includes the second data flow. The second data flow is a data flow of the first apparatus.

The first apparatus determines that the target data flow does not include the second data flow, and then does not need to attempt to obtain the private data flow of the first apparatus from the target data flow, to reduce a workload of the first apparatus and reduce power consumption of the first apparatus.

In a possible implementation, the information indicating that the target data flow includes the second data flow is carried in DCI. For related content and beneficial effects, refer to the content of the third aspect and the possible implementations of the third aspect. Details are not described herein again.

In a possible implementation, the second apparatus sends a target data flow to the first apparatus. The target data flow includes the first data flow. The second apparatus sends second DCI to the first apparatus. The second DCI is scrambled by using a third RNTI, and the third RNTI indicates that the target data flow includes information of the second data flow.

In this way, whether the target data flow includes the second data flow may be implicitly determined. In this implementation, an amount of information sent by the second apparatus may be reduced, to further improve data transmission efficiency.

In a possible implementation, the second apparatus sends a target data flow to the first apparatus. The target data flow includes the first data flow. The second apparatus sends second DCI to the first apparatus. The second DCI is scrambled by using a fourth RNTI, and the fourth RNTI indicates that the target data flow does not include information of the second data flow.

In this way, whether the target data flow includes the second data flow may be implicitly determined. In this implementation, an amount of information sent by the second apparatus may be reduced, to further improve data transmission efficiency.

**According to a fifth aspect,** a communication apparatus is provided. The communication apparatus may be the foregoing first apparatus or the foregoing second apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a chip (system), the processing unit may be one or more processors or processor cores, and the communication unit may be an input/output circuit or a port of a communication chip.

In another design, the communication apparatus is a terminal device or a network device, and the communication unit may be a transmitter and a receiver, or the communication unit is a transmitter machine and a receiver machine.

Optionally, the communication apparatus further includes modules that may be configured to perform any one of the first aspect to the fourth aspect, or perform any one of the possible implementations of the first aspect to the fourth aspect.

**According to a sixth aspect,** a communication apparatus is provided. The communication apparatus may be the foregoing first apparatus or the foregoing second apparatus. The communication apparatus may include a processor and a memory, to perform any one of the first aspect to the fourth aspect, or perform any one of the possible implementations of the first aspect to the fourth aspect. The memory is configured to store a computer program or instructions. The processor is configured to: invoke the computer program or the instructions from the memory, and run the computer program or the instructions. When the processor executes the computer program or the instructions in the memory, the communication apparatus is enabled to perform any one of the first aspect to the fourth aspect, or perform any one of the possible implementations of the first aspect to the fourth aspect. Optionally, the communication apparatus further includes a transceiver.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a seventh aspect,** a communication apparatus is provided. The communication apparatus may be the foregoing first apparatus or the foregoing second apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is a terminal device or a network device, the communication interface may be a transceiver or an input/output interface. Optionally, the transceiver may be a transceiver circuit. Optionally, the input/output interface may be an input/output circuit.

In another implementation, when the communication apparatus is a chip (system), the communication interface may be an input/output interface, an interface circuit, an output circuit, an input circuit, a pin, a related circuit, or the like on the chip or the chip system. The processor may alternatively be embodied as a processing circuit or a logic circuit.

**According to an eighth aspect,** a system is provided. The system includes one or more first apparatuses. In a possible implementation, the system may further include one or more second apparatuses.

**According to a ninth aspect,** a computer program product is provided. The computer program product includes a computer program (which may also be referred to as code or instructions). When the computer program is run, a computer is enabled to perform any one of the first aspect to the fourth aspect, or perform any one of the possible implementations of the first aspect to the fourth aspect.

**According to a tenth aspect,** a computer-readable storage medium is provided. The computer-readable storage medium stores a computer program (which may also be referred to as code or instructions). When the computer program runs on a computer, the computer is enabled to perform any one of the first aspect to the fourth aspect, or perform any one of the possible implementations of the first aspect to the fourth aspect.

**According to an eleventh aspect,** a chip system is provided. The chip system may include a processor. The processor is coupled to a memory, and may be configured to perform any one of the first aspect to the fourth aspect, or perform any one of the possible implementations of the first aspect to the fourth aspect. Optionally, the chip system further includes the memory. The memory is configured to store a computer program (which may also be referred to as code or instructions). The processor is configured to: invoke the computer program from the memory, and run the computer program, so that a device in which the chip system is installed performs any one of the first aspect to the fourth aspect, or performs any one of the possible implementations of the first aspect to the fourth aspect.

**According to a twelfth aspect,** a processing apparatus is provided, including an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, the input circuit and the output circuit may be a same circuit, and the circuit serves as the input circuit and the output circuit at different moments. Specific implementations of the processor and various circuits are not limited in this application.

In an implementation, when the processing apparatus is a terminal device or a network device, the interface circuit may be a radio frequency processing chip in the terminal device or the network device, and the processing circuit may be a baseband processing chip in the terminal device or the network device.

In another implementation, the processing apparatus may be some components in the terminal device or the network device, for example, an integrated circuit product such as a system chip (system) or a communication chip (system). The interface circuit may be an input/output interface, an interface circuit, an output circuit, an input circuit, a pin, a related circuit, or the like on the chip (system). The processing circuit may be a logic circuit on the chip (system).

### BRIEF DESCRIPTION OF DRAWINGS

FIG. 1 is a possible diagram of a system architecture to which an embodiment of this application is applicable;
FIG. 2 is a possible diagram of a rate splitting (rate splitting, RS)-based data transmission principle to which an embodiment of this application is applicable;
FIG. 3 is a possible schematic flowchart of a communication method according to an embodiment of this application;
FIG. 4 is a possible schematic flowchart of a communication method according to an embodiment of this application;
FIG. 5 is a diagram of a possible mapping relationship between a logical bit and a physical bit according to an embodiment of this application;
FIG. 6 is an example of codeword-to-layer mapping according to an embodiment of this application;
FIG. 7 is another example of codeword-to-layer mapping according to an embodiment of this application;
FIG. 8 is a diagram of a possible structure of a communication apparatus according to an embodiment of this application;
FIG. 9 is a diagram of a possible structure of another communication apparatus according to an embodiment of this application; and
FIG. 10 is a diagram of a possible structure of still another communication apparatus according to an embodiment of this application.

### DESCRIPTION OF EMBODIMENTS

The technical solutions in embodiments of this application may be applied to various communication systems such as a 5th generation mobile network (5th generation, 5G) system, an NR system, a long term evolution (long term evolution, LTE) system, an LTE frequency division duplex (frequency division duplex, FDD) system, an LTE time division duplex (time division duplex, TDD) system, a universal mobile communication system (universal mobile telecommunication system, UMTS), a mobile communication system (for example, a 6th generation mobile network (6th generation, 6G) mobile communication system) after a 5G network, and a vehicle to everything (vehicle to everything, V2X) communication system.

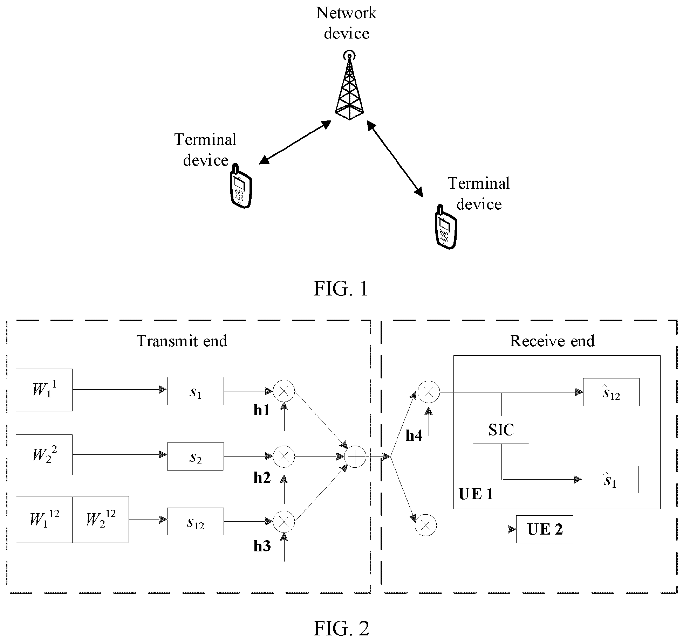

FIG. 1 is an example possible diagram of a system architecture to which an embodiment of this application is applicable. As shown in FIG. 1, a system includes a network device and a terminal device. The network device may separately perform uplink transmission and downlink transmission with a plurality of terminal devices. A transmission direction of uplink transmission is a transmission direction from the terminal device to the network device, and downlink transmission has a transmission direction from the network device to the terminal device.

A solution provided in this application is applicable to communication between a plurality of devices, for example, communication between a network device and one or more terminal devices, communication between a terminal device and one or more terminal devices, or communication between a network device and one or more network devices. The first apparatus used in this application may be a terminal device or a network device, or a module, a unit, or a chip (system) in the terminal device or the network device. The second apparatus used in this application may be a terminal device or a network device, or a module, a unit, or a chip (system) in the terminal device or the network device. In this embodiment of this application, the first apparatus and the second apparatus may be respectively a terminal device and a network device, or may be respectively a chip (system) inside the terminal device and a chip (system) inside the network device, or each may be a terminal device or a unit module or a chip (system) inside the terminal device, or each may be a network device or a unit module or a chip (system) inside the network device.

For ease of understanding of this application, the following describes nouns and terms used in embodiments of this application with reference to the accompanying drawings.

### (1) Terminal device

The terminal device may also be referred to as a terminal or a terminal apparatus. The terminal device includes a device that provides data connectivity for a user. Specifically, the terminal device includes the device that provides data connectivity for the user, or includes the device that provides data connectivity for the user. For example, the terminal device may include a handheld device having a wireless connection function or a processing device connected to a wireless modem. The terminal device may communicate with a core network via a radio access network (radio access network, RAN), and exchange data with the RAN, or interact data with the RAN. The terminal device may include UE, a wireless terminal device, a mobile terminal device, a device-to-device (device-to-device, D2D) communication terminal device, a V2X terminal device, a machine-to-machine/machine-type communication (machine-to-machine/machine-type communication, M2M/MTC) terminal device, and an internet of things (internet of things, IoT) terminal device. Alternatively, the terminal device may be a monitoring device, a machine, a sensor, or the like in an industrial automation scenario, or the terminal device may be a mobile phone, a wearable device, a smart home appliance, a vehicle-mounted terminal, or the like in a home and life scenario. In embodiments of this application, direct communication (PC5) interface communication may be further supported between terminal devices, namely, transmission through a sidelink is supported.

By way of example and not limitation, in embodiments of this application, the terminal device may be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on a smartphone, for example, smart watches or smart glasses, and include devices that dedicated to only one type of application function and need to collaboratively work with another device such as a smartphone, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted devices. For example, the vehicle-mounted device is also referred to as an onboard unit (onboard unit, OBU).

In embodiments of this application, the terminal device may further include a relay (relay). Alternatively, it is understood as that any device that can perform data communication with a base station may be considered as a terminal device.

### (2) Network device

The network device includes, for example, an access network (access network, AN) device such as a base station (for example, an access point), and may be a device that communicates with a terminal apparatus via an air interface through one or more cells in an access network. Alternatively, for example, the network device is a road side unit (road side unit, RSU). The RSU may be a fixed infrastructure entity supporting a V2X application, and may exchange a message with another entity supporting the V2X application. The network device may further include a base station in a code division multiple access (code division multiple access, CDMA) system, a base station in a long term evolution (long Term evolution, LTE) system, or a next generation nodeB (next generation nodeB, gNB) in a 5th generation mobile communication technology (5th generation, 5G) new radio (new radio, NR) system (also referred to as an NR system for short), or may include a central unit (central unit, CU) and a distributed unit (distributed unit, DU) in a cloud access network (cloud radio access network, Cloud RAN) system, or the like. This is not limited in embodiments of this application.

Because embodiments of this application mainly relate to an access network device, the network device described below is an access network device unless otherwise specified.

### (3) Data flow (data flow) and flow quantity

The data flow in embodiments of this application is a data sequence of a group of ordered bytes that have a start point and an end point, that is, an object that may be used to transmit data. A type of the data flow in this application may include service data, a signal flow, and the like. The type of the data flow is not specifically limited in this application. In addition, data flows may include an uplink data flow and a downlink data flow based on directions. The uplink data flow is usually a data flow sent by a terminal device to a RAN device, and the downlink data flow is usually a data flow sent by the RAN device to the terminal device.

The flow quantity (also referred to as a data flow quantity or a spatial flow quantity) is a transport layer quantity of spatial multiplexing, namely, a quantity of diagonal elements (singular values) of a middle diagonal matrix after singular value decomposition (singular value decomposition, SVD) for a MIMO channel transfer matrix. The flow quantity is professionally referred to as a rank (rank), namely, a rank reported by a terminal to a network through CSI. It is defined in an NR protocol that a single user supports a maximum of eight downlink flows and a maximum of four uplink flows.

### (4) RS-based communication mode

In an actual application, to improve utilization of a downlink transmission resource, a network device may reuse a same resource for downlink sending to a plurality of terminal devices. A downlink transmission manner to which embodiments of this application are applied is, for example, an RS-based multi-user multi-flow superposition transmission manner. FIG. 2 is an example possible diagram of an RS-based data transmission principle. The RS-based data transmission principle is described with reference to FIG. 2.

### (4.1) RS-based data sending principle

As shown in FIG. 2, a network device (a transmit end in FIG. 2) may divide data of UE 1 into two parts: *W₁¹* and *W₁¹²,* and respectively encode the two parts into a data flow s₁ and a data flow s₁₂. The network device divides data of UE 2 into two parts: *W₂²* and *W₂¹²,* and respectively encodes the two parts into a data flow s₂ and a data flow s₁₂. The data flow s₁ corresponds to a channel h1, the data flow s₂ corresponds to a channel h2, and the data flow s₁₂ corresponds to a channel h3. The network device respectively sends the channel h1 corresponding to the data flow s₁, the channel h2 corresponding to the data flow s₂, and the channel h3 corresponding to the data flow s₁₂ on a time-frequency resource 1, a time-frequency resource 2, and a time-frequency resource 3. There is an intersection set between a time domain resource of the time-frequency resource 1 and a time domain resource of the time-frequency resource 3, and there is an intersection set between a time domain resource of the time-frequency resource 2 and the time domain resource of the time-frequency resource 3. For ease of understanding, in this example, an example in which the time-frequency resource 1, the time-frequency resource 2, and the time-frequency resource 3 have a same time domain resource and a same frequency domain resource is used for description. The data flow s₁₂ includes data of the UE 1 and data of the UE 2. Both the UE 1 and the UE 2 need to demodulate the data flow s₁₂. The data flow s₁ carries only data of the UE 1. Therefore, the data flow s₁ needs to be demodulated only by the UE 1. The data flow s₂ carries only data of the UE 2. Therefore, the data flow s₂ needs to be demodulated only by the UE 2.

### (4.2) RS-based data receiving principle

With reference to FIG. 2, a process in which a UE end (a receive end in FIG. 2) demodulates data is described by using the UE 1 as an example. The UE 1 may demodulate, based on demodulation information corresponding to the data flow s₁₂, a signal received by the UE 1 on the time-frequency resource 3, to obtain the data (ŝ₁₂ shown in the figure) of the UE 1 in the data flow s₁₂; perform, based on the data of the UE 1 in the data flow s₁₂, successive interference cancellation (successive interference cancellation, SIC) on a signal received on the time-frequency resource 1; and demodulate, based on demodulation information corresponding to the data flow s₁, the signal on which SIC is performed, to obtain the data in the data flow s₁, where the data is denoted as ŝ₁. In this way, the complete data of the UE 1 is obtained.

Steps of SIC include, for example, the following: The UE 1 demodulates the data of the UE 1 in ŝ₁₂; restores the data of the UE 1 in the data flow s₁₂ to a signal based on a channel h4 corresponding to the data flow s₁₂; and subtracts the restored signal from the signal received on the time-frequency resource 1, that is, uses the restored signal as interference to perform interference cancellation on the signal received on the time-frequency resource 1, to obtain the signal on which SIC is performed. Operations of the UE 2 may be performed with reference to operations of the UE 1.

RS-based data transmission has many advantages. For example, the network device may adjust a data ratio of a private flow to a common flow in rate splitting based on different channel conditions, to obtain performance closer to a channel capacity, improve a system capacity, improve resource utilization, obtain a sum rate (sum rate) gain in a high signal-to-noise ratio interval, and make a system more robust when a channel changes rapidly.

### (5) Common data flow and private data flow

### (5.1) Common data flow

The common data flow is a data flow that has a capability of carrying data of a plurality of users. The common data flow may be briefly referred to as a common flow. The common data flow has the capability of carrying the data of the plurality of users. However, in an actual application, the common data flow may carry data flows of a plurality of users, or may carry a data flow of only one user.

For example, in an example shown in FIG. 2, a data flow s₁₂ may be referred to as a common data flow, or referred to as a common data flow corresponding to UE 1, or referred to as a common data flow corresponding to UE 2, or referred to as a common data flow corresponding to UE 1 and UE 2.

### (5.2) Private data flow

The private data flow is a data flow that has a capability of carrying data of one user. The private data flow may be briefly referred to as a private flow.

For example, in an example shown in FIG. 2, a data flow s₁ may be referred to as a private data flow of UE 1, and the data flow s₂ may be referred to as a private data flow of UE 2.

In embodiments of this application, a common data flow that corresponds to a first apparatus and that is sent by a second apparatus to the first apparatus is a common data flow that has a capability of carrying data of the first apparatus. The common data flow may carry the data of the first apparatus, or may not carry the data of the first apparatus.

In embodiments of this application, a private data flow that corresponds to the first apparatus and that is sent by the second apparatus to the first apparatus is a data flow that carries the data of the first apparatus.

There is an intersection set between a time domain resource of the common data flow corresponding to the first apparatus and a time domain resource of the private data flow corresponding to the first apparatus. For example, the intersection set between the time domain resource of the common data flow corresponding to the first apparatus and the time domain resource of the private data flow corresponding to the first apparatus may include one or more time units.

The time unit is a time domain unit used for signal transmission, and may include a time domain unit such as a radio frame (radio frame), a subframe (subframe), a slot (slot), a mini-slot (mini-slot), or at least one orthogonal frequency division multiplexing (Orthogonal Frequency Division Multiplexing, OFDM) symbol. The OFDM symbol may also be briefly referred to as a time domain symbol. In a possible time unit relationship, a time domain length of one radio frame is, for example, 10 ms, one radio frame may include 10 radio subframes, and a time domain length of one radio subframe is 1 ms. One radio subframe may include one or more slots. Specifically, a quantity of slots included in one subframe is related to a subcarrier spacing (Subcarrier Spacing, SCS). When the SCS is 15 kilohertz, a time domain length of one slot is 1 ms. One slot includes 14 symbols.

There may be an intersection set or may be no intersection set between a frequency domain resource of the common data flow corresponding to the first apparatus and a frequency domain resource of the private data flow corresponding to the first apparatus. For example, the intersection set between the time domain resource of the common data flow corresponding to the first apparatus and the time domain resource of the private data flow corresponding to the first apparatus includes a slot m. It may also be understood that both data corresponding to the common data flow corresponding to the first apparatus and data corresponding to the private data flow corresponding to the first apparatus exist in the slot m. The common data flow corresponding to the first apparatus occupies a k^{th} physical resource block to a (k+n)^{th} physical resource block, and the private data flow corresponding to the first apparatus occupies a p^{th} physical resource block to a (p+a)^{th} physical resource block. When there is an intersection set between the frequency domain resource of the common data flow corresponding to the first apparatus and the frequency domain resource of the private data flow corresponding to the first apparatus, some or all of the k^{th} physical resource block to the (k+n)^{th} physical resource block are same physical resource blocks as some or all of the p^{th} physical resource block to the (p+a)^{th} physical resource block. When there is no intersection set between the frequency domain resource of the common data flow corresponding to the first apparatus and the frequency domain resource of the private data flow corresponding to the first apparatus, any one of the k^{th} physical resource block to the (k+n)^{th} physical resource block is different from all of the p^{th} physical resource block to the (p+a)^{th} physical resource block.

For a common flow and a private flow of one UE, how a transmit end precodes the two data flows becomes a problem that needs to be urgently resolved. However, in the conventional technology, no solution is to resolve a problem of precoding the common flow and the private flow in an RS-based data transmission solution. Based on this, embodiments of this application provide a solution. In the solution, a first apparatus may separately feed back a precoding matrix of a common flow and a precoding matrix of a private flow to a second apparatus, so that the second apparatus separately determines precoding matrices (the precoding matrix corresponding to the common flow and the precoding matrix corresponding to the private flow may be the same or may be different) for the common flow and the private flow, and then separately precodes the common flow and the private flow based on the two determined precoding matrices. The solution provided in embodiments of this application may enable a solution in which a common data flow and a private data flow are separately precoded based on two precoding matrices, so that the first apparatus and the second apparatus may communicate based on the common data flow and the private data flow. Such a communication solution may increase a system capacity. The following further describes embodiments of this application with reference to the accompanying drawings.

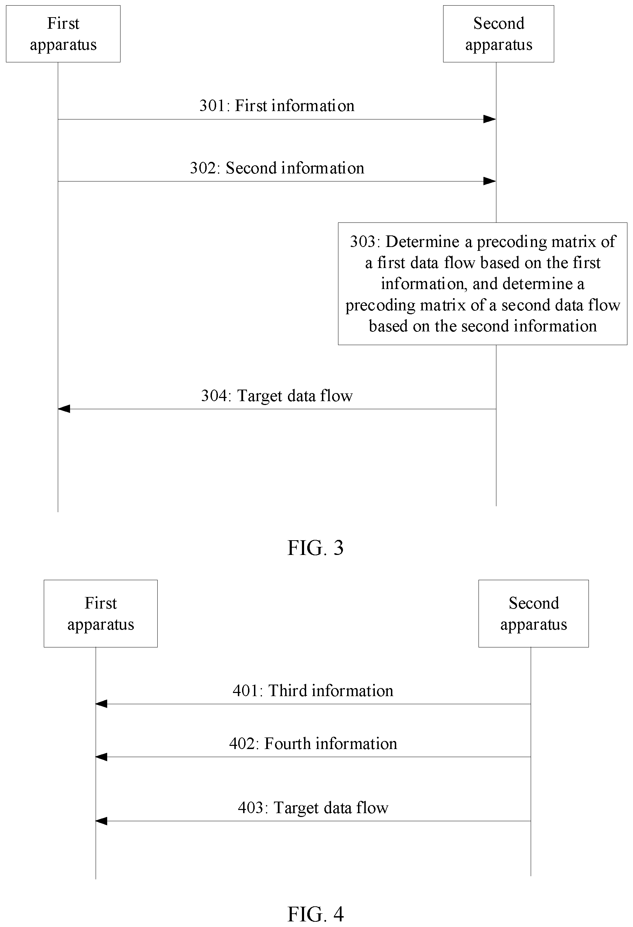

Based on embodiments shown in FIG. 1 and FIG. 2 and other content, **FIG. 3** is an example possible schematic flowchart of a communication method according to an embodiment of this application. For ease of understanding, in a solution shown in FIG. 3, interaction between a first apparatus and a second apparatus is used as an example for description.

In this embodiment of this application, either the first apparatus or the second apparatus may be the terminal device or the network device shown in FIG. 1, or may be a unit module or a chip (system) inside the terminal device, or may be a unit module or a chip (system) inside the network device. For example, the first apparatus is a terminal device, and the second apparatus is a network device. For another example, the first apparatus is a network device, and the second apparatus is a terminal device. For another example, the first apparatus and the second apparatus each are a network device. For another example, the first apparatus and the second apparatus each are a terminal device. For ease of understanding, the following provides descriptions by using an example in which the first apparatus is a terminal device and the second apparatus is a network device.

As shown in FIG. 3, the method includes the following steps.

**Step 301:** The first apparatus sends first information to the second apparatus.

Correspondingly, the second apparatus receives the first information from the first apparatus.

The first information includes information indicating a first precoding matrix. The information indicating the first precoding matrix may include a precoding matrix indicator (precoding matrix indicator, PMI) of the first precoding matrix. The first precoding matrix is a candidate precoding matrix to be used by the second apparatus to precode a first data flow. When determining a precoding matrix for the first data flow, the second apparatus may refer to the first precoding matrix. The precoding matrix that is of the first data flow and that is determined by the second apparatus may be the first precoding matrix or may not be the first precoding matrix.

In step 301, the first apparatus may receive a reference signal (which may also be referred to as a pilot signal) from the second apparatus, and the first apparatus performs channel estimation based on the reference signal, so that the first apparatus obtains channel state information between the first apparatus and the second apparatus based on a channel estimation result. The channel state information may include the information indicating the first precoding matrix.

In this embodiment of this application, the first data flow may be a common data flow corresponding to the first apparatus, or may be a private data flow of the first apparatus. For ease of understanding, subsequent content is described by using an example in which the first data flow is a common data flow corresponding to the first apparatus.

The first data flow has a capability of carrying data of the first apparatus and another apparatus (for example, a third apparatus). For example, the first data flow also has a capability of carrying data of the third apparatus, and the first data flow may also be referred to as a common data flow of the third apparatus. The third apparatus may be the terminal device or the network device in FIG. 1, or a unit module or a chip (system) inside the terminal device, or a unit module or a chip (system) inside the network device. For ease of understanding, the following content is described by using an example in which the third apparatus is a terminal device.

In a possible implementation, the first information includes information indicating a plurality of first precoding matrices, and at least two of the plurality of first precoding matrices are different. In this embodiment of this application, the first apparatus may feed back a candidate precoding matrix of one or more first data flows based on the first information. For ease of understanding, in this embodiment of this application, the candidate precoding matrix of the one or more first data flows that is fed back by the first apparatus based on the first information is collectively referred to as the first precoding matrix. For ease of description, in this embodiment of this application, a candidate precoding matrix (namely, one first precoding matrix) that is of one first data flow and that is fed back by the first apparatus based on the first information is used as an example for description. In this embodiment of this application, a quantity of first precoding matrices fed back by the first apparatus based on the first information may be preset, or may be configured by another apparatus (for example, the second apparatus).

Because the first data flow is a common data flow of the first apparatus, and the common data flow has the capability of carrying the data of the first apparatus and another apparatus (for example, the third apparatus), the another apparatus (for example, the third apparatus) may also feed back a precoding matrix corresponding to the common data flow to the second apparatus. Therefore, when the first apparatus feeds back the plurality of first precoding matrices to the second apparatus, the second apparatus determines that options for the precoding matrix of the first data flow increase, so that the second apparatus can select a better precoding matrix of the first data flow for the first apparatus and the another apparatus (for example, the third apparatus).

In a possible implementation, a first precoding matrix set may be preset, and the first precoding matrix set includes one or more precoding matrices. In this embodiment of this application, the first precoding matrix is a precoding matrix in the first precoding matrix set. In a possible implementation, in step 301, the first apparatus may feed back all precoding matrices in the first precoding matrix set to the second apparatus. In this way, more options may be provided for the second apparatus, so that the second apparatus can select a better precoding matrix of the first data flow for the first apparatus and the another apparatus (for example, the third apparatus).

For example, the second apparatus may select, as the precoding matrix of the first data flow, a candidate precoding matrix that is of a same common data flow and that is fed back by the first apparatus and the another apparatus (for example, the third apparatus). For another example, the first apparatus may select, as the precoding matrix of the first data flow, a candidate precoding matrix fed back by either the first apparatus or the another apparatus (for example, the third apparatus). For another example, the first apparatus may determine a new candidate precoding matrix as the precoding matrix of the first data flow based on candidate precoding matrices fed back by the first apparatus and the another apparatus (for example, the third apparatus). For example, the first apparatus feeds back a candidate precoding matrix P1 of the common data flow, and the third apparatus feeds back a candidate precoding matrix P2 of the common data flow. The second apparatus may determine a candidate precoding matrix P3 based on the candidate precoding matrix and the candidate precoding matrix, and use the candidate precoding matrix P3 (for example, P3=a*P1+b*P2, * represents a multiplication sign, a and b may respectively represent two coefficients, and a and b may be the same or may be different) as a matrix used to precode the common data flow.

In a possible implementation, the first information further includes a modulation and coding scheme (modulation and coding scheme, MCS) corresponding to the first precoding matrix. In this way, when determining precoding information for the first data flow, the second apparatus may refer to the MCS in the first information, so that the second apparatus can determine more proper precoding information. The MCS includes information such as a QAM modulation order and/or a code rate.

In a possible implementation, the first information further includes rank indication information corresponding to the first precoding matrix. In this way, when determining the precoding information for the first data flow, the second apparatus may refer to the rank indication information in the first information, so that the second apparatus can determine more proper precoding information.

**Step 302:** The first apparatus sends second information to the second apparatus.

Correspondingly, the second apparatus receives the second information from the first apparatus.

The second information includes information indicating a second precoding matrix. The second precoding matrix is a candidate precoding matrix to be used by the second apparatus to precode a second data flow. When determining a precoding matrix for the second data flow, the second apparatus may refer to the second precoding matrix. The precoding matrix that is of the second data flow and that is determined by the second apparatus may be the second precoding matrix or may not be the second precoding matrix.

In this embodiment of this application, the second information and the first information may be carried in a same message. To be specific, the first apparatus may feed back the candidate precoding matrix of the first data flow and the candidate precoding matrix of the second data flow to the second apparatus by using the same message. In this embodiment of this application, the second information and the first information may be respectively carried in two different messages. For example, the first apparatus may feed back the two pieces of information to the first apparatus by using the two messages. In this way, solution flexibility can be improved.

In this embodiment of this application, the second data flow may be a common data flow corresponding to the first apparatus, or may be a private data flow of the first apparatus. For ease of understanding, subsequent content is described by using an example in which the second data flow is a private data flow of the first apparatus.

There is an intersection set between a time domain resource of the first data flow and a time domain resource of the second data flow. For example, the time domain resource of the first data flow and the time domain resource of the second data flow include at least one same time domain symbol (for example, at least one same slot). It may also be understood that time in which the second apparatus sends the first data flow and time in which the second apparatus sends the second data flow partially overlap. The first data flow has a capability of carrying data of the first apparatus, and the second data flow is a data flow of the first apparatus. That there is an intersection set between the time domain resource of the first data flow and the time domain resource of the second data flow may also be understood as that the second apparatus may superpose the first data flow and the second data flow in time domain for sending. There may be an intersection set or may be no intersection set between a frequency domain resource of the first data flow and a frequency domain resource of the second data flow.

The following lists several possible examples. For example, the time domain resource of the first data flow and the time domain resource of the second data flow are the same. In other words, the time domain resource of the first data flow and the time domain resource of the second data flow completely overlap. For another example, the time domain resource of the first data flow and the time domain resource of the second data flow are partially the same (that is, are not completely the same). In other words, the time domain resource of the first data flow and the time domain resource of the second data flow partially overlap. For another example, there is an intersection set between the time domain resource of the first data flow and the time domain resource of the second data flow, and the frequency domain resource of the first data flow and the frequency domain resource of the second data flow are the same. In other words, the frequency domain resource of the first data flow and the frequency domain resource of the second data flow completely overlap. For another example, there is an intersection set between the time domain resource of the first data flow and the time domain resource of the second data flow, and the frequency domain resource of the first data flow and the frequency domain resource of the second data flow are partially the same (that is, are not completely the same). In other words, the frequency domain resource of the first data flow and the frequency domain resource of the second data flow partially overlap. For another example, there is an intersection set between the time domain resource of the first data flow and the time domain resource of the second data flow, and the frequency domain resource of the first data flow and the frequency domain resource of the second data flow are completely different. In other words, the frequency domain resource of the first data flow and the frequency domain resource of the second data flow do not overlap. A time domain situation and a frequency domain situation indicated by the several examples may be freely combined, and there is no specific combination relationship. For example, the time domain resource of the first data flow and the time domain resource of the second data flow are the same, and the frequency domain resource of the first data flow and the frequency domain resource of the second data flow may be the same, partially the same, or completely different. For another example, the time domain resource of the first data flow and the time domain resource of the second data flow are partially the same, and the frequency domain resource of the first data flow and the frequency domain resource of the second data flow may be the same, partially the same, or completely different.

In a possible implementation, the second information includes information indicating a plurality of second precoding matrices, and at least two of the plurality of second precoding matrices are different. In this embodiment of this application, the first apparatus may feed back a candidate precoding matrix of one or more second data flows based on the second information. For ease of understanding, in this embodiment of this application, the candidate precoding matrix of the one or more second data flows that is fed back by the first apparatus based on the second information is collectively referred to as the second precoding matrix. For ease of description, in this embodiment of this application, a candidate precoding matrix (namely, one second precoding matrix) that is of one second data flow and that is fed back by the first apparatus based on the second information is used as an example for description.

In this embodiment of this application, a quantity of second precoding matrices fed back by the first apparatus based on the second information may be preset, or may be configured by another apparatus (for example, the second apparatus). There is no necessary association relationship between the quantity of second precoding matrices fed back by the first apparatus based on the second information and the quantity of first precoding matrices fed back by the first apparatus based on the first information. The two quantities may be different or may be the same. In this way, solution flexibility can be improved.

In this embodiment of this application, the first precoding matrix fed back by the first apparatus by using the first information may be the same as or different from the second precoding matrix fed back by the first apparatus by using the second information. When the first apparatus feeds back the plurality of first precoding matrices by using the first information, and the first apparatus feeds back the plurality of second precoding matrices by using the second information, each of the plurality of first precoding matrices fed back by the first apparatus may be different from all of the plurality of second precoding matrices, or at least one of the plurality of first precoding matrices fed back by the first apparatus is the same as at least one of the plurality of second precoding matrices.

Because the first apparatus feeds back the plurality of second precoding matrices to the second apparatus, the second apparatus determines that options for the precoding matrix of the second data flow increase, so that the second apparatus can select a better precoding matrix for the second data flow.

In a possible implementation, the second information further includes an MCS corresponding to the second precoding matrix. In this way, when determining precoding information for the second data flow, the second apparatus may refer to the MCS in the second information, so that the second apparatus can determine more proper precoding information.

In a possible implementation, the second information further includes rank indication information corresponding to the second precoding matrix. In this way, when determining the precoding information for the second data flow, the second apparatus may refer to the rank indication information in the second information, so that the second apparatus can determine more proper precoding information.

There is no necessary sequence between step 301 and step 302. For example, step 302 may be performed before step 301, or step 302 and step 301 are performed simultaneously.

In a possible implementation, after step 302, the method may further include step 303 and step 304.

**Step 303:** The second apparatus determines the precoding matrix of the first data flow based on the first information, and determines the precoding matrix of the second data flow based on the second information.

The precoding matrix that is of the first data flow and that is determined by the second apparatus may be the first precoding matrix or may not be the first precoding matrix. The precoding matrix that is of the second data flow and that is determined by the second apparatus may be the second precoding matrix or may not be the second precoding matrix.

**Step 304:** The second apparatus sends a target data flow.

Correspondingly, the first apparatus receives the target data flow.

The target data flow may include the first data flow. In step 304, the first data flow sent by the second apparatus may carry the data of the first apparatus, or may not carry the data of the first apparatus. In step 304, the first data flow sent by the second apparatus may carry data of one apparatus (for example, the first apparatus or the third apparatus), or may carry data of a plurality of apparatuses (for example, the first apparatus and the third apparatus).

It can be learned from the foregoing content that, because there is an intersection set between the time domain resource of the first data flow and the time domain resource of the second data flow, the first apparatus may separately feed back two precoding matrices based on a reference signal of the second apparatus, and the two precoding matrices are respectively used to precode the first data flow and the second data flow, a solution of respectively precoding the first data flow and the second data flow based on the two precoding matrices may be enabled. In addition, because the solution of respectively precoding the first data flow and the second data flow based on the two precoding matrices is enabled in this application, the first apparatus and the second apparatus may communicate based on the first data flow and the second data flow, to increase a system capacity.

In this embodiment of this application, the target data flow further includes two possible implementations. Implementation A1: The target data flow includes the second data flow. Implementation A2: The target data flow does not include the second data flow. The following separately provides descriptions.

**Implementation A1:** The target data flow includes the second data flow.

In Implementation A1, the second apparatus needs to send the data of the first apparatus by using the private data flow of the first apparatus. Because there is an intersection set between the time domain resource of the first data flow and the time domain resource of the second data flow, the target data flow sent by the second apparatus includes the first data flow and the second data flow, or it may be understood that the second apparatus superposes the first data flow and the second data flow in a time domain direction, and then sends the first data flow and the second data flow.

In Implementation A1, the target data flow may further include a private data flow of another apparatus, for example, may further include a private data flow of the third apparatus. There is an intersection set between a time domain resource of the private data flow of the third apparatus and the time domain resource of the first data flow. It may also be understood that the second apparatus superposes the first data flow, the second data flow, and the private data flow of the third apparatus in the time domain direction, and then sends the first data flow, the second data flow, and the private data flow of the third apparatus. In this application, a data flow sent by the second apparatus is referred to as a target data flow.

**Implementation A2:** The target data flow does not include the second data flow.

In Implementation A2, the second apparatus may not send the private data flow of the first apparatus. For example, the target data flow may include the common data flow of the first apparatus (the common data flow of the first apparatus may carry the data of the first apparatus, or may not carry the data of the first apparatus). For another example, the target data flow may include the common data flow of the first apparatus and the private data flow of the third apparatus.

If the common data flow of the first apparatus includes the data of the first apparatus, but the target data flow does not include the second data flow, in a possible implementation, the first apparatus may obtain the data of the first apparatus only from the common data flow, and may not attempt to parse the private data flow of the first apparatus from a received signal.

In this embodiment of this application, a relationship between the first precoding matrix and the second precoding matrix that are fed back by the first apparatus may have a plurality of implementations. The following provides descriptions in Implementation B 1, Implementation B2, Implementation B3, and Implementation B4. Any two of Implementation B 1, Implementation B2, Implementation B3, and Implementation B4 have no necessary association, and may be separately implemented, or may be used in combination.

**Implementation B1:** Bandwidth corresponding to the first precoding matrix and bandwidth corresponding to the second precoding matrix may be separately configured.

In Implementation B 1, the bandwidth corresponding to the first precoding matrix and the bandwidth corresponding to the second precoding matrix may be separately set. The bandwidth corresponding to the first precoding matrix may be different from the bandwidth corresponding to the second precoding matrix.

For example, a codebook mode (codebook mode) is defined in NR, and specifically includes a mode 1 (mode 1) and a mode 2 (mode 2). A beam in the mode 1 is a wideband mode, and a beam in the mode 2 is a wideband plus subband mode. The common data flow has a capability of carrying information of a plurality of users, the common data flow may carry the information of the plurality of users, and the private data flow carries information of a single user. Therefore, in a possible implementation, the bandwidth corresponding to the first precoding matrix may be set to the mode 1, and the bandwidth corresponding to the second precoding matrix may be set to the mode 2. In this way, a quantity of beams corresponding to the common data flow may be less than a quantity of beams corresponding to the private data flow. It may also be understood that a granularity of the beam corresponding to the common data flow is coarser, and a granularity of the beam corresponding to the private data flow is finer. In this way, power consumption can be reduced. In addition, the private data flow corresponds to more beams, and directivity of the private data flow can be enhanced, so that energy of the beams corresponding to the private data flow is more concentrated, to improve communication performance.

**Implementation B2:** A codebook level quantity corresponding to the first precoding matrix and a codebook level quantity corresponding to the second precoding matrix may be separately configured.

In Implementation B2, the codebook level quantity corresponding to the first precoding matrix and the codebook level quantity corresponding to the second precoding matrix may be separately set. The codebook level quantity corresponding to the first precoding matrix may be different from the codebook level quantity corresponding to the second precoding matrix.

In a possible implementation, a precoding matrix set corresponding to the common data flow includes a small quantity of precoding matrices, and it may also be understood as that a granularity of a beam corresponding to the common data flow is coarse; and a precoding matrix set corresponding to the private data flow includes a large quantity of precoding matrices, and it may also be understood as that a granularity of a beam corresponding to the private data flow is fine. In this way, power consumption can be reduced. In addition, the private data flow corresponds to more beams, and directivity of the private data flow can be enhanced, so that energy of the beams corresponding to the private data flow is more concentrated, to improve communication performance.

For example, in a possible implementation, the codebook level quantity corresponding to the first precoding matrix may be set to a one-level codebook, and the codebook level quantity corresponding to the second precoding matrix may be set to a two-level codebook.

For example, the first precoding matrix set is Q1, the first precoding matrix is q1, and q1 is an element in Q1. A second precoding matrix set may include two precoding matrix sets: a precoding matrix set Q2_1 and a precoding matrix set Q2_2. A precoding matrix q2_1 is a precoding matrix in the precoding matrix set Q2_1, and a precoding matrix q2_2 is a precoding matrix in the precoding matrix set Q2_2. A second precoding matrix identifier is q2, the codebook level quantity corresponding to the second precoding matrix is a two-level codebook, a second precoding matrix q2 may be (q2_1 *q2_2), and * may represent multiplication. The first precoding matrix set Q1 may be the precoding matrix set Q2_1 or the precoding matrix set Q2_2, or the first precoding matrix set Q1 may be the precoding matrix set Q2_1 and the precoding matrix set Q2_2. Alternatively, the first precoding matrix set Q1 is a subset of the precoding matrix set Q2_1. Alternatively, the first precoding matrix set Q1 is a subset of the precoding matrix set Q2_2.

**Implementation B3:** A quantity of precoding resource block groups corresponding to the first precoding matrix and a quantity of precoding resource block groups corresponding to the second precoding matrix may be separately configured.

In Implementation B3, the precoding resource block group corresponding to the first precoding matrix and the precoding resource block group corresponding to the second precoding matrix may be separately set. The precoding resource block group corresponding to the first precoding matrix may be different from the precoding resource block group corresponding to the second precoding matrix.

A precoding resource block group corresponding to one precoding matrix may indicate a quantity of physical resource blocks (physical resource block, PRB) to which one precoding matrix is applied, namely, a width of a frequency range to which one precoding matrix is applicable. For example, the precoding resource block group (precoding resource block group bundle, PRG bundle) corresponding to the first precoding matrix is 8, and the precoding resource block group corresponding to the second precoding matrix is 2. It can be learned that, a large quantity of physical resource blocks are used for a precoding matrix corresponding to the common data flow. Therefore, a quantity of precoding matrices that need to be used for the common data flow can be reduced, to reduce a quantity of precoding matrices that correspond to the common data flow and that need to be fed back by the first apparatus side, and reduce feedback overheads. A small quantity of physical resource blocks are used for a precoding matrix corresponding to the private data flow. Because different physical resource blocks correspond to different channels, the precoding matrix used for the private data flow can better match a channel condition corresponding to the private data flow, to improve communication performance.

**Implementation B4:** The first precoding matrix is a precoding matrix in the first precoding matrix set. The second precoding matrix is a precoding matrix in the second precoding matrix set. The precoding matrix included in the first precoding matrix set and the precoding matrix included in the second precoding matrix set may be separately configured.

In Implementation B4, a precoding matrix in the first precoding matrix set and a precoding matrix that is in the first precoding matrix set and that corresponds to the second precoding matrix may be separately set. A quantity of precoding matrices included in the first precoding matrix set may be different from a quantity of precoding matrices included in the second precoding matrix set.

The precoding matrix in the first precoding matrix set may have no intersection set or have an intersection set with the precoding matrix in the second precoding matrix set.

In a possible implementation, the first precoding matrix set is a subset of the second precoding matrix set. For example, ranks supported by the precoding matrices in the second precoding matrix set are 1, 2, 3, ..., and N. N is a positive integer. The precoding matrix in the first precoding matrix set may be a precoding matrix whose supported rank is 1 in the second precoding matrix set. Alternatively, the precoding matrix in the first precoding matrix set may be a precoding matrix whose supported rank is 1 and whose supported rank is 2 in the second precoding matrix set. Because the first precoding matrix set is a subset of the second precoding matrix set, a quantity of precoding matrix sets that need to be defined can be reduced, to reduce signaling overheads and reduce storage space occupied by a precoding matrix.

In step 301, the first apparatus sends the first information in a plurality of manners. For example, the first apparatus may send the first information when being triggered by the second apparatus, or periodically send the information about the candidate precoding matrix of the first data flow. The following separately describes Implementation C1 and Implementation C2.

**Implementation C1:** The first apparatus sends the first information based on first trigger information.

In a possible implementation, the second apparatus sends the first trigger information to the first apparatus. Correspondingly, the first apparatus receives the first trigger information. The first trigger information triggers the first apparatus to feed back the information about the candidate precoding matrix of the first data flow. The first apparatus sends the first information to the second apparatus based on the first trigger information.

In this way, when determining, according to an actual requirement of the second apparatus, that the first apparatus needs to feed back a candidate precoding matrix of the common data flow of the first apparatus, the second apparatus may send the first trigger information to the first apparatus, to trigger the first apparatus to feed back the candidate precoding matrix of the common data flow of the first apparatus. In this way, compared with a solution in which the first apparatus periodically feeds back the candidate precoding matrix of the common data flow of the first apparatus, this solution can reduce signaling consumption.

**Implementation C2:** The first apparatus periodically feeds back information about the candidate precoding matrix of the common data flow of the first apparatus.

In a possible implementation, the first apparatus periodically sends, by using first duration as a periodicity, information indicating the candidate precoding matrix of the first data flow. In this embodiment of this application, when the first apparatus periodically sends the information indicating the candidate precoding matrix of the first data flow, one piece of the information that is fed back by the first apparatus and that indicates the candidate precoding matrix of the first data flow may be the first information. It may alternatively be understood that the first information is information that is sent by the first apparatus in one periodicity and that indicates the candidate precoding matrix of the first data flow. Correspondingly, the second apparatus periodically receives, by using the first duration as a periodicity, the information indicating the candidate precoding matrix of the first data flow.

In this embodiment of this application, the first apparatus may send, in one periodicity, one piece of information indicating the candidate precoding matrix of the first data flow, and the one piece of information indicating the candidate precoding matrix of the first data flow may indicate one or more candidate precoding matrices. Candidate precoding matrices respectively indicated by two pieces of information indicating the candidate precoding matrix of the first data flow may be completely different, or completely the same, or partially the same.

For example, information that is sent by the first apparatus in one periodicity and that indicates the candidate precoding matrix of the first data flow indicates a candidate precoding matrix a1 and a candidate precoding matrix a2, and information that is sent by the first apparatus in another periodicity and that indicates the candidate precoding matrix of the first data flow indicates a candidate precoding matrix a3. Both the candidate precoding matrix a1 and the candidate precoding matrix a2 are different from the candidate precoding matrix a3, or one of the candidate precoding matrix a1 and the candidate precoding matrix a2 is the same as a candidate precoding matrix a4.

For another example, information that is sent by the first apparatus in one periodicity and that indicates the candidate precoding matrix of the first data flow indicates a candidate precoding matrix a1 and a candidate precoding matrix a2, and information that is sent by the first apparatus in another periodicity and that indicates the candidate precoding matrix of the first data flow indicates a candidate precoding matrix a3 and a candidate precoding matrix a4. For example, the candidate precoding matrix a3 is the same as the candidate precoding matrix a1, and the candidate precoding matrix a4 is the same as the candidate precoding matrix a2. For another example, the candidate precoding matrix a3 is different from the candidate precoding matrix a1, and the candidate precoding matrix a4 is different from the candidate precoding matrix a2. For another example, the candidate precoding matrix a3 is the same as the candidate precoding matrix a1, and the candidate precoding matrix a4 is different from the candidate precoding matrix a2. For another example, the candidate precoding matrix a3 is different from the candidate precoding matrix a1, and the candidate precoding matrix a4 is the same as the candidate precoding matrix a2.

The information about the first precoding matrix belongs to a candidate precoding matrix indicated by the information that is fed back by the first apparatus in one periodicity and that indicates the candidate precoding matrix of the first data flow. The candidate precoding matrix indicated by the information that is fed back by the first apparatus in the another periodicity and that indicates the candidate precoding matrix of the first data flow may also include the first precoding matrix, or may not include the first precoding matrix. This is not limited in this embodiment of this application.

The first apparatus may periodically feed back information about the candidate precoding matrix of the common data flow of the first apparatus. In this way, when the second apparatus needs to determine the precoding matrix of the common data flow of the first apparatus, the second apparatus can select the precoding matrix based on a newly received candidate precoding matrix. In a possible implementation, the first apparatus may feed back the information about the candidate precoding matrix of the common data flow of the first apparatus at a low frequency. In this case, overheads caused by feedback can be reduced.

In step 302, the first apparatus sends the second information in a plurality of manners. For example, the first apparatus may send the first information when being triggered by the second apparatus, or periodically send the information about the candidate precoding matrix of the first data flow. The following separately describes Implementation D1 and Implementation D2.

**Implementation D1:** The first apparatus sends the second information based on second trigger information.

In a possible implementation, the second apparatus sends the second trigger information to the first apparatus. The second trigger information triggers the first apparatus to feed back information about the candidate precoding matrix of the second data flow. Correspondingly, the first apparatus receives the second trigger information. The first apparatus sends the second information to the second apparatus based on the second trigger information.

In this way, when determining, according to an actual requirement of the second apparatus, that the first apparatus needs to feed back a candidate precoding matrix of the private data flow of the first apparatus, the second apparatus may send the second trigger information to the first apparatus, to trigger the first apparatus to feed back the candidate precoding matrix of the private data flow of the first apparatus. In this way, compared with a solution in which the first apparatus periodically feeds back the candidate precoding matrix of the private data flow of the first apparatus, this solution can reduce signaling consumption.

**Implementation D2:** The first apparatus periodically feeds back information about a candidate precoding matrix of the private data flow of the first apparatus.

In a possible implementation, the first apparatus periodically sends, by using second duration as a periodicity, information indicating the candidate precoding matrix of the second data flow. In this embodiment of this application, when the first apparatus periodically sends the information indicating the candidate precoding matrix of the second data flow, one piece of the information that is fed back by the first apparatus and that indicates the candidate precoding matrix of the second data flow may be the second information. It may alternatively be understood that the second information is information that is sent by the first apparatus in one periodicity and that indicates the candidate precoding matrix of the second data flow. Correspondingly, the second apparatus periodically receives, by using the second duration as a periodicity, the information indicating the candidate precoding matrix of the second data flow.

In this embodiment of this application, the first apparatus may send, in one periodicity, one piece of information indicating the candidate precoding matrix of the second data flow, and the one piece of information indicating the candidate precoding matrix of the second data flow may indicate one or more candidate precoding matrices. Candidate precoding matrices respectively indicated by two pieces of information indicating the candidate precoding matrix of the second data flow may be completely different, or completely the same, or partially the same.

For example, information that is sent by the first apparatus in one periodicity and that indicates the candidate precoding matrix of the second data flow indicates a candidate precoding matrix b1 and a candidate precoding matrix b2, and information that is sent by the first apparatus in another periodicity and that indicates the candidate precoding matrix of the second data flow indicates a candidate precoding matrix b3. Both the candidate precoding matrix b1 and the candidate precoding matrix b2 are different from the candidate precoding matrix b3, or one of the candidate precoding matrix b1 and the candidate precoding matrix b2 is the same as a candidate precoding matrix b4.

For another example, information that is sent by the first apparatus in one periodicity and that indicates the candidate precoding matrix of the second data flow indicates a candidate precoding matrix b1 and a candidate precoding matrix b2, and information that is sent by the first apparatus in another periodicity and that indicates the candidate precoding matrix of the second data flow indicates a candidate precoding matrix b3 and a candidate precoding matrix b4. For example, the candidate precoding matrix b3 is the same as the candidate precoding matrix b1, and the candidate precoding matrix b4 is the same as the candidate precoding matrix b2. For another example, the candidate precoding matrix b3 is different from the candidate precoding matrix b1, and the candidate precoding matrix b4 is different from the candidate precoding matrix b2. For another example, the candidate precoding matrix b3 is the same as the candidate precoding matrix b1, and the candidate precoding matrix b4 is different from the candidate precoding matrix b2. For another example, the candidate precoding matrix b3 is different from the candidate precoding matrix b1, and the candidate precoding matrix b4 is the same as the candidate precoding matrix b2.

The information about the second precoding matrix belongs to a candidate precoding matrix indicated by the information that is fed back by the first apparatus in one periodicity and that indicates the candidate precoding matrix of the second data flow. The candidate precoding matrix indicated by the information that is fed back by the first apparatus in the another periodicity and that indicates the candidate precoding matrix of the second data flow may also include the second precoding matrix, or may not include the second precoding matrix. This is not limited in this embodiment of this application.

The first apparatus may periodically feed back information about the candidate precoding matrix of the private data flow of the first apparatus. In this way, when the second apparatus needs to determine the precoding matrix of the private data flow of the first apparatus, the second apparatus can select the precoding matrix based on a newly received candidate precoding matrix.

When the first apparatus also periodically feeds back the information about the candidate precoding matrix of the common data flow of the first apparatus, a frequency at which the first apparatus feeds back the information about the candidate precoding matrix of the private data flow of the first apparatus may be different from a frequency at which the first apparatus feeds back the information about the candidate precoding matrix of the common data flow of the first apparatus. It may also be understood as that the first duration may be different from the second duration.

In a possible implementation, the first apparatus may feed back the information about the candidate precoding matrix of the private data flow of the first apparatus at a high frequency. In this way, the second apparatus can determine a precoding matrix that is of the private data flow of the first apparatus and that better matches an actual situation. For example, the frequency at which the first apparatus feeds back the information about the candidate precoding matrix of the private data flow of the first apparatus may be higher than the frequency at which the first apparatus feeds back the information about the candidate precoding matrix of the common data flow of the first apparatus. It may also be understood as that the first duration may be greater than the second duration. For example, the first duration may be 10 milliseconds, and the second duration may be 5 milliseconds. It can be learned that, in this implementation, the first apparatus can reduce an amount of fed-back information about the candidate precoding matrix of the common data flow of the first apparatus, to reduce overheads required for feeding back the information about the candidate precoding matrix of the common data flow of the first apparatus and the information about the candidate precoding matrix of the private data flow of the first apparatus.

The first apparatus may feed back the information about the candidate precoding matrix of the common data flow of the first apparatus in Implementation C1 or Implementation C2, and the first apparatus may feed back the information about the candidate precoding matrix of the private data flow of the first apparatus in Implementation D1 or Implementation D2. For example, the first apparatus may select Implementation C1 and Implementation D1. In this way, the first trigger information and the second trigger information may be one piece of information, or may be two different pieces of information. When the first trigger information and the second trigger information are two different pieces of information, the first trigger information and the second trigger information may be carried in one message, or may be carried in two messages.

Based on embodiments shown in FIG. 1, FIG. 2, and FIG. 3 and other content, **FIG. 4** is an example possible schematic flowchart of a communication method according to an embodiment of this application. For ease of understanding, in a solution shown in FIG. 4, interaction between a first apparatus and a second apparatus is used as an example for description. For related descriptions of the first apparatus and the second apparatus, refer to the related descriptions in FIG. 3. Details are not described again. For ease of understanding, the following provides descriptions by using an example in which the first apparatus is a terminal device and the second apparatus is a network device. It may be understood that the embodiment shown in FIG. 4 and the embodiment shown in FIG. 3 may be combined or may be independent of each other.

As shown in FIG. 4, the method includes the following steps.

**Step 401:** The second apparatus sends third information to the first apparatus.

Correspondingly, the first apparatus receives the third information from the second apparatus.

The third information includes at least one of the following content: information indicating a time-frequency resource occupied by a first data flow; information indicating a modulation and coding scheme of the first data flow; or a DMRS port corresponding to the first data flow. Optionally, the third information may further include information indicating a precoding matrix to be used for the first data flow, or may not include information indicating a precoding matrix to be used for the first data flow. The first apparatus may perform channel estimation based on a received reference signal, and restore required data from received information based on a channel estimation result. For related descriptions of the first data flow, refer to related descriptions in the embodiment in FIG. 3. Details are not described again. The following provides descriptions by using an example in which the first data flow is a common data flow of the first apparatus.

The first data flow may include data of the first apparatus, or may not include data of the first apparatus. When the first data flow includes the data of the first apparatus, the third information may further include location indication information indicating a location of the data of the first apparatus in the first data flow. In this way, the first apparatus may learn of a specific bit of information of the first apparatus in the first data flow, and then obtain the information of the first apparatus from the common data flow.

The location indication information may include a bit position occupied by the data of the first apparatus in the first data flow. In a possible implementation, there is a mapping relationship between a physical bit and a logical bit in the first data flow. In this application, the physical bit is an actual bit in the first data flow. The mapping relationship between the physical bit and the logical bit may be referred to as virtual mapping. The location indication information may include identification information of a logical bit corresponding to a physical bit occupied by the data of the first apparatus in the first data flow. In this way, a quantity of bits occupied by the location indication information of the second apparatus can be reduced, to reduce overheads.

In a possible implementation, the logical bit may be further classified into a logical bit group. The location indication information may include group identification information of a logical bit group corresponding to the data of the first apparatus. The logical bit group includes one or more consecutive logical bits, and the logical bit group has a mapping relationship with one physical bit, a plurality of consecutive physical bits, or a plurality of inconsecutive physical bits. One logical bit has a mapping relationship with one or more physical bits. Therefore, solution flexibility can be improved.

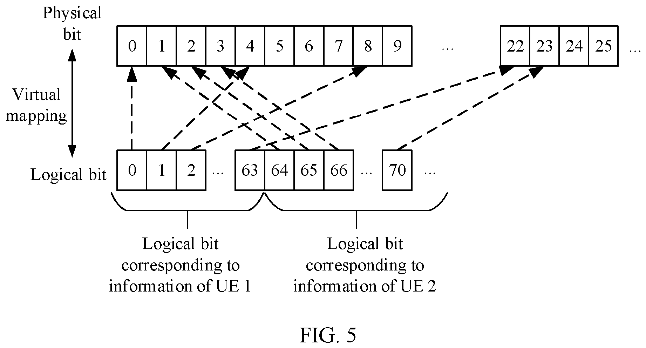

**FIG. 5** is an example diagram of a possible mapping relationship between a logical bit and a physical bit. As shown in FIG. 5, one logical bit and one physical bit have a virtual mapping relationship. For example, in FIG. 5, a logical bit 0 has a mapping relationship with a physical bit 0, and a logical bit 1 has a mapping relationship with a physical bit 4. A common information part sent to a user is continuously mapped onto logical bits. For example, logical bits corresponding to information of UE 1 are a logical bit 0 to a logical bit 63, and logical bits corresponding to information of UE 2 are a string of consecutive logical bits after a logical bit 64. In a possible implementation, the logical bit may be first classified into a logical bit group. For example, the logical bit 0 to the logical bit 63 are one logical bit group, and the logical bit 64 to a logical bit 127 are one logical bit group. Location indication information corresponding to the UE 1 may be a start point and length information of a logical bit group corresponding to the information of the UE 1 (for example, location information of the UE 1 may include 00000000 and 01000000, 00000000 indicates the start point of the logical bit group corresponding to the information of the UE 1, and 01000000 indicates a length of the logical bit group corresponding to the information of the UE 1), or may be a start point and an end point of the logical bit group. In another implementation, a specific logical bit group corresponding to the UE 1 may be indicated in a bitmap mapping manner. The location indication information corresponding to the UE 1 may be information indicating the logical bit group corresponding to the UE 1.

In still another possible implementation, the third information further includes identification information indicating a layer onto which a codeword corresponding to data of the first data flow is mapped. In this way, the first apparatus may parse the first data flow based on the identification information of the layer corresponding to the first data flow, to reduce difficulty in parsing the first data flow by the first apparatus. The codeword corresponding to the data of the first data flow and a codeword corresponding to a second data flow may be separately set. Data of the second data flow may correspond to one or more codewords. The codeword corresponding to the data of the first data flow is different from a codeword corresponding to the data of the second data flow. One of the one or more codewords of the second data flow may be mapped onto one or more layers. The data of the first data flow may correspond to one or more codewords. One of the one or more codewords corresponding to the data of the first data flow may be mapped onto one or more layers. The layer onto which the codeword corresponding to the data of the first data flow is mapped is different from a layer onto which the codeword corresponding to the data of the second data flow is mapped. In this way, difficulty in parsing data by the first apparatus can be reduced.

For example, when a codeword of a common data flow and a codeword of a private data flow of the first apparatus are mapped onto different layers, a quantity of layers received by the first apparatus is a sum of a quantity of layers onto which the codeword of the common data flow of the first apparatus is mapped and a quantity of layers onto which the codeword of the private data flow of the first apparatus is mapped. In a possible implementation, the codeword of the common data flow of the first apparatus is mapped onto one layer. Table 1 shows a codeword-to-layer mapping example. As shown in FIG. 1, a codeword CCW1 may be mapped onto a layer 1. Table 1 further shows information indicating whether the layer 1 includes common information. For example, in Table 1, if a preset field "common information" is 0, it indicates that the layer 1 does not carry the common information; or if a preset field "common information" is 1, it indicates that the layer 1 carries the common information.

**Table 1 Codeword-to-layer mapping example**

| Layer identifier | Common information (Common msg. indi.) | Codeword identifier | Codeword-to-layer mapping |
|---|---|---|---|
| Layer 1 | 0 (no com msg.) | 0 | - |
| | 1 | CCW1 | CCW1-to-layer 1 mapping |

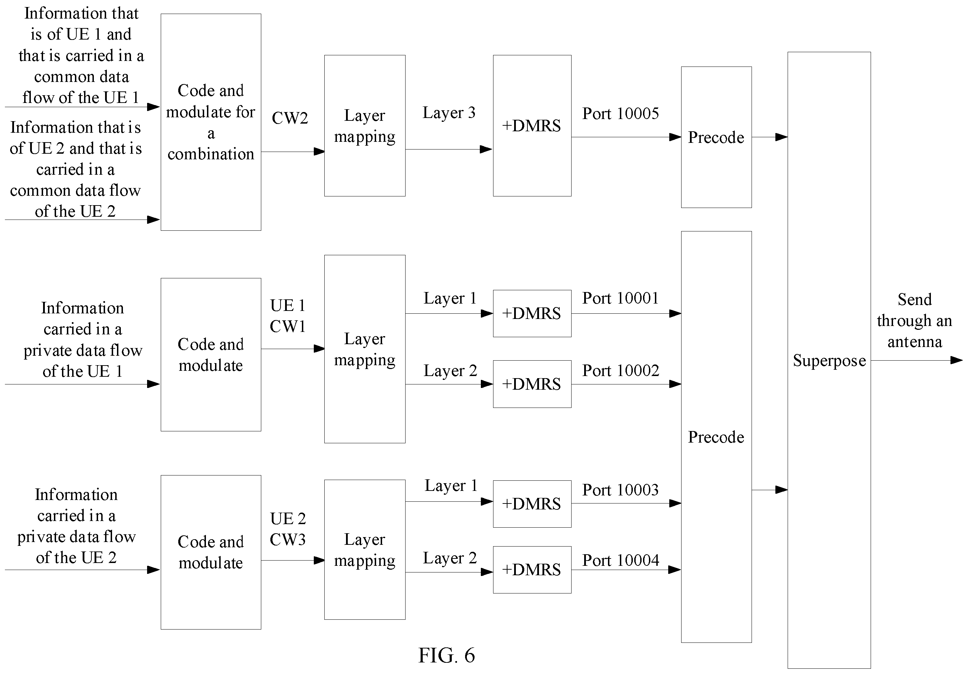

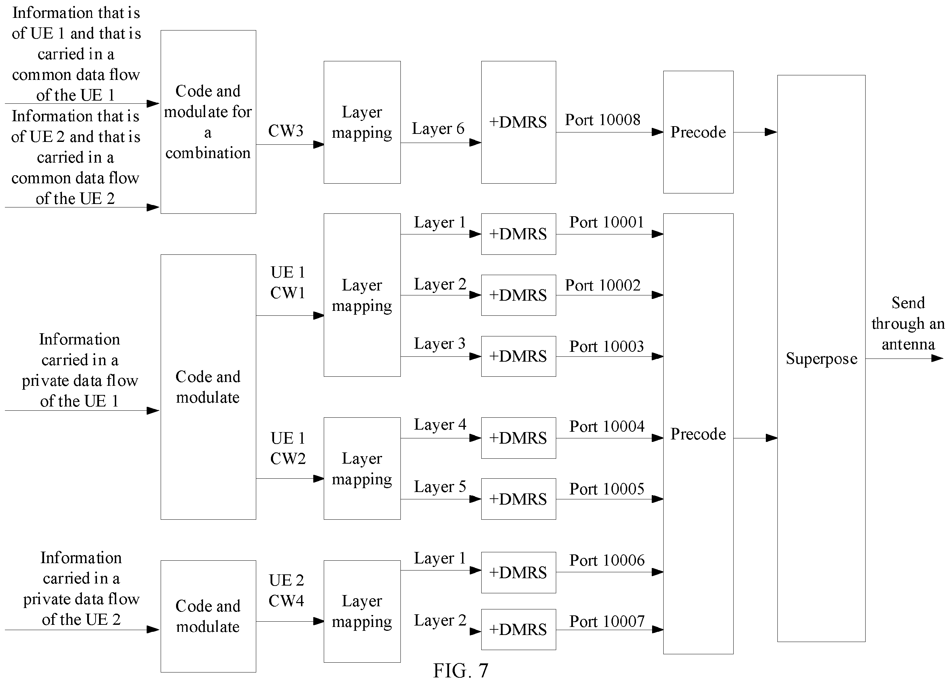

In another possible implementation, if the codeword of the common data flow of the first apparatus is mapped onto one layer, a table of a quantity of layers of private information may be similar to a table in NR. The following shows several codeword-to-layer mapping examples provided in this embodiment of this application by using FIG. 6 and FIG. 7.

As shown in FIG. 6, an example in which the first apparatus is the UE 1 and the second apparatus is a network device is used for description. FIG. 6 shows a data processing procedure inside the network device. As shown in FIG. 6, the information of the UE 1 corresponds to two codewords: CW1 and CW2. CW1 is a codeword corresponding to information carried in a private data flow of the UE 1, and CW2 is a codeword corresponding to the information of the UE 1 and the information of the UE 2 that are carried in a common data flow of the UE 1. Similarly, the information of the UE 2 corresponds to two codewords: CW3 and the codeword CW2. CW3 is a codeword corresponding to information carried in a private data flow of the UE 2. CW1 of the UE 1 may be mapped onto two layers: a layer 1 and a layer 2, and then are separately sent through a DMRS port 10001 and a DMRS port 10002. CW3 of the UE 2 may be mapped onto two layers: a layer 1 and a layer 2, and then are separately sent through a DMRS port 10003 and a DMRS port 10004. CW2 may be mapped onto one layer, namely, a layer 3, and then is sent through a DMRS port 10005. Then, the network device separately encodes the common data flow of the UE 1, a common data flow of the UE 2, the private data flow of the UE 1, and the private data flow of the UE 2; superposes encoded data flows, and sends the encoded data flows through an antenna. It can be learned from this example that the codeword of the private data flow of the UE 1 corresponds to two layers (the layer 1 and the layer 2), and the codeword of the common data flow of the UE 1 corresponds to one layer (the layer 3). Therefore, the information of the UE 1 corresponds to a total of three layers: the layer 1, the layer 2, and the layer 3. Similarly, the codeword of the private data flow of the UE 2 corresponds to two layers (the layer 1 and the layer 2), and the codeword of the common data flow of the UE 2 corresponds to one layer (the layer 3). Therefore, the information of the UE 2 corresponds to a total of three layers: the layer 1, the layer 2, and the layer 3.

As shown in FIG. 7, an example in which the first apparatus is the UE 1 and the second apparatus is a network device is used for description. FIG. 7 shows a data processing procedure inside the network device. As shown in FIG. 7, the information of the UE 1 corresponds to three codewords: CW1, CW2, and CW3, CW1 and CW2 are codewords corresponding to information carried in a private data flow of the UE 1, and CW3 is a codeword corresponding to a common data flow carrying the information of the UE 1 and the information of the UE 2. Similarly, the information of the UE 2 corresponds to two codewords: CW4 and the codeword CW3. CW4 is a codeword corresponding to information carried in a private data flow of the UE 2. CW1 of the UE 1 may be mapped onto three layers: a layer 1, a layer 2, and a layer 3, and then are separately sent through a DMRS port 10001, a DMRS port 10002, and a DMRS port 10003. CW2 of the UE 1 may be mapped onto two layers: a layer 4 and a layer 5, and then are separately sent through a DMRS port 10004 and a DMRS port 10005. CW4 of the UE 2 may be mapped onto two layers: a layer 1 and a layer 2, and then are separately sent through a DMRS port 10006 and a port 10007. CW3 may be mapped onto one layer, namely, a layer 6, and then is sent through a DMRS port 10008. Then, the network device separately encodes the common data flow of the UE 1, a common data flow of the UE 2, the private data flow of the UE 1, and the private data flow of the UE 2; superposes encoded data flows, and sends the encoded data flows through an antenna. It can be learned from this example that the codeword of the private data flow of the UE 1 corresponds to five layers (the layer 1, the layer 2, the layer 3, the layer 4, and the layer 5), and the codeword of the common data flow of the UE 1 corresponds to one layer (the layer 6). Therefore, the information of the UE 1 corresponds to a total of six layers: the layer 1, the layer 2, the layer 3, the layer 4, the layer 5, and the layer 6. Similarly, the codeword of the private data flow of the UE 2 corresponds to two layers (the layer 1 and the layer 2), and the codeword of the common data flow of the UE 2 corresponds to one layer (the layer 6). Therefore, the information of the UE 2 corresponds to a total of three layers: the layer 1, the layer 2, and the layer 6.

In a possible implementation, the third information may be carried in specified DCI (UE-specific DCI) or group DCI (group DCI) of the first apparatus; or the third information is carried in specified DCI (UE-specific DCI) and group DCI (group DCI) of the first apparatus. In this embodiment of this application, bandwidth occupied by the common data flow of the first apparatus and bandwidth occupied by the private data flow of the first apparatus may be different. In this way, network parameters can be set for the common data flow and the private data flow more flexibly.

**Step 402:** The second apparatus sends fourth information to the first apparatus.

Correspondingly, the first apparatus receives the fourth information from the second apparatus.

Step 402 is an optional step, and step 402 may not be performed in the embodiment shown in FIG. 4. There is no necessary sequence between step 401 and step 402. For example, step 402 may be performed before step 401, or step 402 and step 401 are performed simultaneously.

The fourth information includes at least one of the following content: information indicating a time-frequency resource occupied by the second data flow; information indicating a modulation and coding scheme of the second data flow; information indicating a DMRS port corresponding to the second data flow; or identification information indicating a layer onto which a codeword corresponding to the data of the first apparatus in the second data flow is mapped.

For related descriptions of the second data flow, refer to the related descriptions in the embodiment in FIG. 3. Details are not described again. The following provides descriptions by using an example in which the second data flow is a private data flow of the first apparatus.

**Step 403:** The second apparatus sends a target data flow.

Correspondingly, the first apparatus receives the target data flow.

The target data flow includes the first data flow. It may also be understood as that the first apparatus receives the first data flow in the target data flow based on the third information. When the first apparatus receives the third information, the first apparatus may determine related information of the first data flow based on the third information, and then may obtain related information of the first apparatus in the first data flow from received data.

The target data flow may include the second data flow, or may not include the second data flow. For related descriptions of the target data flow, refer to related descriptions of the target data flow in the embodiment in FIG. 3. Details are not described again. There is an intersection set between a time domain resource of the first data flow and a time domain resource of the second data flow. For a relationship between the first data flow and the second data flow, refer to related descriptions in the embodiment in FIG. 3. Details are not described again.

When the target data flow includes the second data flow, it may also be understood that the first apparatus receives the first data flow and the second data flow from the second apparatus based on the third information. When the first apparatus receives the fourth information, the first apparatus may determine related information of the second data flow based on the fourth information, and then may obtain information in the second data flow from received data.

The embodiment shown in FIG. 4 and the embodiment shown in FIG. 3 may be used in combination, or may be implemented separately. When the embodiment shown in FIG. 4 and the embodiment shown in FIG. 3 are used in combination, step 401 may be performed after step 301 and before step 303, and step 402 may be performed after step 302 and before step 303. Step 403 may be step 303.

In step 403, the first data flow included in the target data flow sent by the second apparatus to the first apparatus has a capability of carrying information of the first apparatus, and the first data flow may carry the information of the first apparatus, or may not carry the information of the first apparatus. In a possible implementation, the second apparatus may indicate, to the first apparatus, whether the first data flow carries the information of the first apparatus. For example, the second apparatus may indicate, by using indication information or in another manner without using indication information, whether the first data flow carries the information of the first apparatus. The following separately provides descriptions in Implementation E1 and Implementation E2.

**Implementation E1:** The second apparatus indicates, by using the indication information, whether the first data flow carries the information of the first apparatus.

In Implementation E1, in a possible implementation, the second apparatus sends, to the first apparatus, information indicating that the first data flow includes the data of the first apparatus. Correspondingly, the first apparatus receives the information that is from the second apparatus and that indicates that the first data flow includes the data of the first apparatus. The first apparatus obtains the data of the first apparatus from the first data flow based on the indication that the first data flow includes the data of the first apparatus. In a possible implementation, the information indicating that the first data flow includes the data of the first apparatus is carried in DCI, for example, may be carried in a preset first field in the DCI. The information indicating that the first data flow includes the data of the first apparatus may be a first preset value of the preset first field. In this way, no new piece of signaling needs to be set to carry the information indicating that the first data flow includes the data of the first apparatus, to reduce signaling overheads. This more compatible with the conventional technology.

In another possible implementation, the second apparatus sends, to the first apparatus, information indicating that the first data flow does not include the data of the first apparatus. Correspondingly, the first apparatus receives the information that is from the second apparatus and that indicates that the first data flow does not include the data of the first apparatus. The first apparatus determines, based on the information indicating that the first data flow does not include the data of the first apparatus, that the first data flow does not include the data of the first apparatus, and then does not need to attempt to obtain the data of the first apparatus from the first data flow, to reduce a workload of the first apparatus and reduce power consumption of the first apparatus.

In a possible implementation, the information indicating that the first data flow does not include the data of the first apparatus is carried in DCI, for example, may be carried in a preset second field in the DCI, and the information indicating that the first data flow does not include the data of the first apparatus may be a second preset value of the preset second field. The second field and the first field may be one field, or may be two different fields. When the first field is the same as the second field, the first preset value is different from the second preset value. When the first field is different from the second field, the first preset value may be the same as or different from the second preset value.

**Implementation E2:** The second apparatus indicates, in another manner (without using indication information), whether the first data flow carries the information of the first apparatus.

In a possible implementation, the second apparatus indicates, by scrambling DCI by using different radio network temporary identifiers (radio network temporary identifier, RNTI), whether the first data flow carries the information of the first apparatus. For example, the second apparatus sends first DCI to the first apparatus. Correspondingly, the first apparatus receives the first DCI. When determining that the first DCI is scrambled by using a first RNTI, the first apparatus determines that the first data flow includes the data of the first apparatus. In another possible implementation, when determining that the first DCI is scrambled by using a second RNTI, the first apparatus determines that the first data flow does not include the data of the first apparatus. The first RNTI is different from the second RNTI. In this implementation, whether the first data flow includes the data of the first apparatus may be implicitly indicated, so that an amount of information sent by the second apparatus can be reduced, to further improve data transmission efficiency.

In step 403, the target data flow sent by the second apparatus to the first apparatus may include the second data flow, or may not include the second data flow. In a possible implementation, the second apparatus may indicate, to the first apparatus, whether the target data flow carries the second data flow. For example, the second apparatus may indicate, by using indication information or in another manner without using indication information, whether the target data flow carries the second data flow. The following separately provides descriptions in Implementation F1 and Implementation F2.

**Implementation F1:** The second apparatus indicates, by using the indication information, whether the target data flow carries the second data flow.

In Implementation F1, in a possible implementation, the second apparatus sends, to the first apparatus, information indicating that the target data flow includes the second data flow. Correspondingly, the first apparatus receives the information that is from the second apparatus and that indicates that the target data flow includes the second data flow. The first apparatus obtains data of the second data flow from the target data flow based on the indication that the target data flow includes the second data flow. In a possible implementation, the information indicating that the target data flow includes the second data flow is carried in DCI, for example, may be carried in a preset third field in the DCI. The information indicating that the target data flow includes the second data flow may be a third preset value of the preset third field.

In another possible implementation, the second apparatus sends, to the first apparatus, information indicating that the target data flow does not include the second data flow. Correspondingly, the first apparatus receives the information that is from the second apparatus and that indicates that the target data flow does not include the second data flow. The first apparatus determines, based on the indication that the target data flow does not include the second data flow, that the target data flow does not include the second data flow, and then does not need to attempt to obtain the private data flow of the first apparatus from the target data flow, to reduce a workload of the first apparatus and reduce power consumption of the first apparatus.

In a possible implementation, the information indicating that the target data flow does not include the second data flow is carried in DCI, for example, may be carried in a preset field in the DCI. The information indicating that the target data flow does not include the second data flow may be a fourth preset value of the preset fourth field. In this way, no new piece of signaling needs to be set to carry the information indicating that the target data flow does not include the second data flow, to reduce signaling overheads. This is more compatible with the conventional technology. The fourth field and the third field may be one field, or may be two different fields. When the third field is the same as the fourth field, the third preset value is different from the fourth preset value. When the third field is different from the fourth field, the third preset value may be the same as or different from the fourth preset value.

**Implementation F2:** The second apparatus indicates, in another manner (without using the indication information), whether the target data flow carries the second data flow.

In a possible implementation, the second apparatus indicates, by scrambling DCI by using different RNTIs, whether the target data flow carries the second data flow. For example, the second apparatus sends second DCI to the first apparatus. Correspondingly, the first apparatus receives the second DCI. When determining that the second DCI is scrambled by using a third RNTI, the first apparatus determines that the target data flow includes the second data flow. In another possible implementation, when determining that the second DCI is scrambled by using a fourth RNTI, the first apparatus determines that the target data flow does not include the second data flow. The third RNTI is different from the fourth RNTI. In this way, whether the target data flow includes the second data flow may be implicitly determined. In this implementation, an amount of information sent by the second apparatus may be reduced, to further improve data transmission efficiency.

It should be noted that names of the foregoing messages are merely used as examples. With evolution of communication technologies, a name of any of the foregoing messages may change. However, regardless of how the names of the messages change, the messages fall within the protection scope of this application provided that meanings of the messages are the same as those of the foregoing messages in this application.

In embodiments of this application, sending information to a terminal device may be understood as that a destination of the information is the terminal device. For example, that a module A sends information to a terminal includes: The module A sends the information to the terminal through an air interface. Optionally, the module A may perform a baseband and/or intermediate radio frequency operation on the information; or the module A submits the information to a module B, and the module B sends the information to the terminal. When sending the information to the terminal, the module B may transparently transmit the information; segment the information and then send the information; or multiplex the information and other information and then send the information. Optionally, the module B may perform a baseband and/or intermediate radio frequency operation on the information and then send the information. Optionally, the module B may encapsulate the information in a data packet. Optionally, the module B may further add a header, a padding bit, and/or the like to the data packet.

In embodiments of this application, receiving information from a terminal device may be understood as that a source of the information is the terminal device. For example, that a module A receives information from a terminal device includes: The module A receives the information from a terminal through an air interface. Optionally, the module A may perform a baseband and/or intermediate radio frequency operation on the information; or a module B receives the information from the terminal through an air interface, and submits the information to the module A. That the module B delivers the information to the module A includes: transparently delivering the received information to the module A; combining a plurality of received segments into the information and then delivering the information to the module A; or extracting the information from multiplexed information and then delivering the information to the module A. Optionally, the module B may perform a baseband and/or intermediate radio frequency operation on the received information and then send the information. Optionally, the information received by the module B is encapsulated in a data packet. Optionally, the data packet includes a header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

The foregoing mainly describes, from a perspective of interaction between network elements, the solutions provided in this application. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units and algorithm steps may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

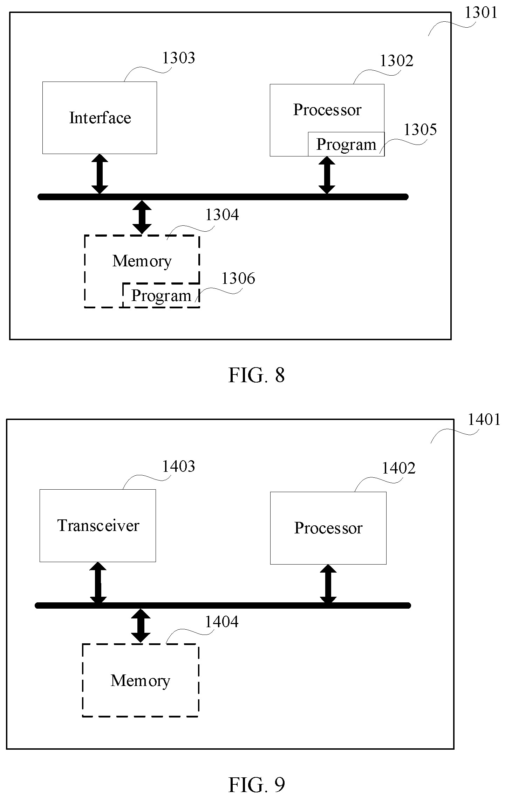

According to the foregoing method, **FIG. 8** is a diagram of a structure of an apparatus according to an embodiment of this application. The apparatus provided in FIG. 8 may be the first apparatus or the second apparatus in FIG. 3 and FIG. 4.

FIG. 8 is a simplified diagram of an apparatus 1301. The apparatus 1301 is configured to implement a function of a network element in this embodiment of this application. For example, the network element may be a base station, a terminal, a DU, a CU, a CU-CP, a CU-UP, or an RU. The apparatus 1301 may be the network element, or an apparatus that can be installed in the network element, or an apparatus that can be used to match the network element. This is not limited. For example, the apparatus may be a chip or a chip system. The apparatus 1301 includes an interface 1303 and a processor 1302. Optionally, the processor 1302 is configured to execute a program 1305. The processor 1302 may store the program 1305, or obtain the program 1305 from another component or another device (for example, download the program 1305 from a memory 1304 or a third-party website). Optionally, the apparatus 1301 includes the memory 1304. The memory 1304 is configured to store a program 1306. The program 1306 may be pre-stored, or may be subsequently loaded. Optionally, the memory 1304 may be further configured to store necessary data. These components operate together to provide various functions described in this embodiment of this application.

The processor 1302 may include one or more processors, to serve as a combination of a computing device. The processor 1302 may include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other proper hardware or firmware, and/or a combination of hardware and software configured to perform various functions described in this embodiment of this application. The processor 1302 may be a general-purpose processor or a dedicated processor. For example, the processor 1302 may be a baseband processor or a central processing unit. The baseband processor may be configured to process a communication protocol and communication data. The central processing unit may be configured to: execute a software program, and process data in the software program.

The interface 1303 may include any proper hardware or software configured to enable communication with one or more computer devices (for example, the network element in this embodiment of this application). For example, in some embodiments, the interface 1303 may include a terminal and/or a pin for coupling a wire for a wired connection or for coupling a wireless interface for a wireless connection. In some embodiments, the interface 1303 may include a transmitter, a receiver, an interface, and/or an antenna. The interface may be configured to enable communication between computer devices (for example, the network elements in this embodiment of this application) by using any available protocol (for example, a 3GPP standard protocol).

The program in this embodiment of this application is software in a broad sense. The software may be program code, a program, a subprogram, an instruction set, code, a code segment, a software module, an application program, a software application program, or the like. The program may run in a processor and/or a computer, to perform various functions and/or processes described in this embodiment of this application.

The memory 1304 may store necessary data required when the processor 1302 executes software. The memory 1304 may be implemented by using any suitable storage technology. For example, the memory 1304 may be any available storage medium that can be accessed by a processor and/or a computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic storage medium, a magnetic storage device, a flash memory, a register, a state memory, a remotely installed memory, a local or remote storage component, or any other medium that can carry or store software, data, or information and can be accessed by a processor/computer.

The memory 1304 and the processor 1302 may be disposed separately, or may be integrated together. The processor 1302 may read information from the memory 1304, and store and/or write information into the memory. The memory 1304 may be integrated into the processor 1302. The processor 1302 and the memory 1304 may be disposed in an integrated circuit (for example, an application-specific integrated circuit (application-specific integrated circuit, ASIC)). The integrated circuit may be disposed in the network element or another network node in this embodiment of this application. In the figure, the memory 1304 is a dashed line, which further identifies that the memory is optional.

Further, the communication apparatus 1301 may further include a bus system. The processor 1302, the memory 1304, and the interface 1303 may be connected through the bus system.

As shown in FIG. 8, the apparatus 1301 may be a first apparatus or a second apparatus, or may be a chip (system) or a circuit, for example, a chip (system) or a circuit that may be disposed in the first apparatus, for another example, a chip (system) or a circuit that may be disposed in the second apparatus.

When the apparatus 1301 is configured to implement a function of the first apparatus, in a possible implementation, the processor 1302 is configured to send first information to the second apparatus through the interface 1303. The first information includes information indicating a first precoding matrix, and the first precoding matrix is a candidate precoding matrix to be used by the second apparatus to precode a first data flow. The processor 1302 is configured to send second information to the second apparatus through the interface 1303. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

In a possible implementation, the processor 1302 is configured to receive first trigger information through the interface 1303. The first trigger information triggers the first apparatus to feed back information about the candidate precoding matrix of the first data flow and send the first information to the second apparatus based on the first trigger information.

In a possible implementation, the processor 1302 is configured to receive second trigger information through the interface 1303. The second trigger information triggers the first apparatus to feed back information about the candidate precoding matrix of the second data flow and send second information to the second apparatus based on the second trigger information.

In a possible implementation, the processor 1302 is configured to periodically send, through the interface 1303 by using first duration as a periodicity, information indicating the candidate precoding matrix of the first data flow. One piece of the information indicating the candidate precoding matrix of the first data flow is the first information.

In a possible implementation, the processor 1302 is configured to periodically send, through the interface 1303 by using second duration as a periodicity, information indicating the candidate precoding matrix of the second data flow. One piece of the information indicating the candidate precoding matrix of the second data flow is the second information.

When the apparatus 1301 is configured to implement a function of the second apparatus, in a possible implementation, the processor 1302 is configured to receive first information from the first apparatus through the interface 1303. The first information includes information indicating a first precoding matrix, and the first precoding matrix is a candidate precoding matrix to be used by the second apparatus to precode a first data flow. The processor 1302 is configured to receive second information from the first apparatus through the interface 1303. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

In a possible implementation, the processor 1302 is configured to send first trigger information to the first apparatus through the interface 1303. The first trigger information triggers the first apparatus to feed back information about the candidate precoding matrix of the first data flow.

In a possible implementation, the processor 1302 is configured to send second trigger information to the first apparatus through the interface 1303. The second trigger information triggers the first apparatus to feed back information about the candidate precoding matrix of the second data flow.

In a possible implementation, the processor 1302 is configured to periodically receive, through the interface 1303 by using first duration as a periodicity, information indicating the candidate precoding matrix of the first data flow. One piece of the information indicating the candidate precoding matrix of the first data flow is the first information.

In a possible implementation, the processor 1302 is configured to periodically receive, through the interface 1303 by using second duration as a periodicity, information indicating the candidate precoding matrix of the second data flow. One piece of the information indicating the candidate precoding matrix of the second data flow is the second information.

When the apparatus 1301 is configured to implement a function of the first apparatus, in a possible implementation, the processor 1302 is configured to: receive third information from the second apparatus through the interface 1303, and receive a first data flow and a second data flow from the second apparatus based on the third information. There is an intersection set between a time domain resource of the first data flow and a time domain resource of the second data flow.

In a possible implementation, the processor 1302 is configured to receive fourth information from the second apparatus through the interface 1303.

In a possible implementation, the processor 1302 is configured to: receive, through the interface 1303, information that is from the second apparatus and that indicates that the first data flow includes data of the first apparatus, and obtain the data of the first apparatus from the first data flow based on the indication that the first data flow includes the data of the first apparatus.

In a possible implementation, the processor 1302 is configured to receive first DCI through the interface 1303. The processor 1302 is configured to: when determining that the first DCI is scrambled by using a first RNTI, determine that the first data flow includes the data of the first apparatus.

In a possible implementation, the processor 1302 is configured to receive first DCI through the interface 1303. The processor 1302 is configured to: when determining that the first DCI is scrambled by using a second RNTI, determine that the first data flow does not include the data of the first apparatus.

In a possible implementation, the processor 1302 is configured to receive, through the interface 1303, a target data flow from the second apparatus based on the third information. The target data flow includes the first data flow. The processor 1302 is configured to receive, through the interface 1303, information that is from the second apparatus and that indicates that the target data flow includes the second data flow. The second data flow is a data flow of the first apparatus; and the processor 1302 is configured to obtain data of the second data flow from the target data flow based on the information indicating that the target data flow includes the second data flow.

In a possible implementation, the processor 1302 is configured to receive, through the interface 1303, a target data flow from the second apparatus based on the third information. The target data flow includes the first data flow. The processor 1302 is configured to receive second DCI through the interface 1303, and the processor 1302 is configured to: when determining that the second DCI is scrambled by using a third RNTI, determine that the target data flow includes information of the second data flow.

In a possible implementation, the processor 1302 is configured to receive, through the interface 1303, a target data flow from the second apparatus based on the third information. The target data flow includes the first data flow. The processor 1302 is configured to: when determining that the second DCI is scrambled by using a fourth RNTI, determine that the target data flow does not include information of the second data flow.

When the apparatus 1301 is configured to implement a function of the second apparatus, in a possible implementation, the processor 1302 is configured to send third information to the first apparatus through the interface 1303, and the processor 1302 is configured to send a first data flow and a second data flow to the first apparatus through the interface 1303. There is an intersection set between a time domain resource of the first data flow and a time domain resource of the second data flow.

In a possible implementation, the processor 1302 is configured to send fourth information to the first apparatus through the interface 1303.

In a possible implementation, the processor 1302 is configured to send, to the first apparatus through the interface 1303, information indicating that the first data flow includes data of the first apparatus.

In a possible implementation, the processor 1302 is configured to send first DCI to the first apparatus through the interface 1303. The first DCI is scrambled by using a first RNTI, and the first RNTI indicates that the first data flow includes the data of the first apparatus.

In a possible implementation, the processor 1302 is configured to send first DCI to the first apparatus through the interface 1303. The first DCI is scrambled by using a second RNTI, and the second RNTI indicates that the first data flow does not include the data of the first apparatus.

In a possible implementation, the processor 1302 is configured to send a target data flow to the first apparatus through the interface 1303. The target data flow includes the first data flow. In a possible implementation, the processor 1302 is configured to send, to the first apparatus through the interface 1303, information indicating that the target data flow includes a second data flow. The second data flow is a data flow of the first apparatus.

In a possible implementation, the processor 1302 is configured to send a target data flow to the first apparatus through the interface 1303. The target data flow includes the first data flow. In a possible implementation, the second apparatus sends second DCI to the first apparatus. The second DCI is scrambled by using a third RNTI, and the third RNTI indicates that the target data flow includes information of the second data flow.

In a possible implementation, the processor 1302 is configured to send a target data flow to the first apparatus through the interface 1303. The target data flow includes the first data flow. In a possible implementation, the processor 1302 is configured to send second DCI to the first apparatus through the interface 1303. The second DCI is scrambled by using a fourth RNTI, and the fourth RNTI indicates that the target data flow does not include information of the second data flow.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing method, **FIG. 9** is a diagram of a structure of a communication apparatus according to an embodiment of this application. As shown in FIG. 9, the apparatus 1401 may include a transceiver 1403 and a processor 1402. Further, the apparatus 1401 may include a memory 1404. In the figure, the memory 1404 is a dashed line, which further identifies that the memory is optional. The transceiver 1403 is configured to input and/or output information. The processor 1402 is configured to execute a computer program or instructions, so that the apparatus 1401 implements the first apparatus or the second apparatus in the related solution in FIG. 3 or FIG. 4. In this embodiment of this application, the transceiver 1403 may implement the solution implemented by the interface 1303 in FIG. 8, the processor 1402 may implement the solution implemented by the processor 1302 in FIG. 8, and the memory 1404 may implement the solution implemented by the memory 1304 in FIG. 8. Details are not described herein again.

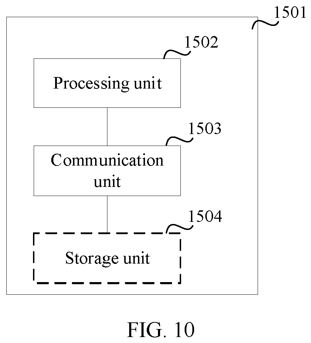

Based on the foregoing embodiments and a same concept, **FIG. 10** is a diagram of a communication apparatus according to an embodiment of this application. The apparatus provided in FIG. 10 may be the first apparatus or the second apparatus in FIG. 3 and FIG. 4. As shown in FIG. 10, the apparatus 1501 may be a first apparatus or a second apparatus, or may be a chip (system) or a circuit, for example, a chip (system) or a circuit that may be disposed in the first apparatus, for another example, a chip (system) or a circuit that may be disposed in the second apparatus.

The apparatus 1501 includes a processing unit 1502 and a communication unit 1503. Further, the apparatus 1501 may include a storage unit 1504, or may not include a storage unit 1504. In the figure, the storage unit 1504 is a dashed line, which further identifies that the memory is optional.

When the apparatus 1501 is configured to implement a function of a network device, in a possible implementation, the processing unit 1502 is configured to send first information to the second apparatus through the communication unit 1503. The first information includes information indicating a first precoding matrix, and the first precoding matrix is a candidate precoding matrix to be used by the second apparatus to precode a first data flow. The processing unit 1502 is configured to send second information to the second apparatus through the communication unit 1503. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

When the apparatus 1501 is configured to implement a function of the second apparatus, in a possible implementation, the processing unit 1502 is configured to receive first information from the first apparatus through the communication unit 1503. The first information includes information indicating a first precoding matrix, and the first precoding matrix is a candidate precoding matrix to be used by the second apparatus to precode a first data flow. The processing unit 1502 is configured to receive second information from the first apparatus through the communication unit 1503. The second information includes information indicating a second precoding matrix, the second precoding matrix is a candidate precoding matrix to be used by the second apparatus to precode a second data flow, and there is an intersection set between a time domain resource of the first data flow and a time domain resource of the second data flow.

When the apparatus 1501 is configured to implement a function of the first apparatus, in a possible implementation, the processing unit 1502 is configured to: receive third information from the second apparatus through the communication unit 1503, and receive a first data flow and a second data flow from the second apparatus based on the third information. There is an intersection set between a time domain resource of the first data flow and a time domain resource of the second data flow.

When the apparatus 1501 is configured to implement a function of the second apparatus, in a possible implementation, the processing unit 1502 is configured to: send third information to the first apparatus through the communication unit 1503, and send a first data flow and a second data flow to the first apparatus. There is an intersection set between a time domain resource of the first data flow and a time domain resource of the second data flow.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for a function of each unit in the apparatus 1501, refer to implementations of corresponding method embodiments. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by the interface 1303 in FIG. 8, and the processing unit 1502 may be implemented by the processor 1302 in FIG. 8.

According to the method provided in embodiments of this application, this application further provides a computer program product. The computer program product includes computer program code or instructions, and when the computer program code or the instructions are run on a computer, the computer is enabled to perform the method in any one of the embodiments shown in FIG. 3 or FIG. 4.

According to the method provided in embodiments of this application, this application further provides a computer-readable storage medium. The computer-readable storage medium stores program code. When the program code is run on a computer, the computer is enabled to perform the method in any one of the embodiments shown in FIG. 3 or FIG. 4.

According to the method provided in embodiments of this application, this application further provides a chip system. The chip system may include a processor. The processor is coupled to a memory, and may be configured to perform the method in any one of the embodiments shown in FIG. 3 or FIG. 4. Optionally, the chip system further includes the memory. The memory is configured to store a computer program (which may also be referred to as code or instructions). The processor is configured to invoke a computer program from the memory and run the computer program, so that a device on which the chip system is installed performs the method in any one of the embodiments shown in FIG. 3 or FIG. 4.

According to the method provided in embodiments of this application, this application further provides a system, including one or more first apparatuses and second apparatuses.

According to the method provided in embodiments of this application, this application further provides a computer program product. The computer program product stores a computer program, the computer program includes program instructions, and when the program instructions are executed by a computer, the computer is enabled to perform the method in any one of the embodiments shown in FIG. 3 or FIG. 4.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disc (solid state disc, SSD)), or the like.

It should be noted that a part of this patent application document includes copyright-protected content. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first apparatus, first information to a second apparatus, wherein the first information comprises information indicating a first precoding matrix, and the first precoding matrix is a candidate precoding matrix to be used by the second apparatus to precode a first data flow; and
sending, by the first apparatus, second information to the second apparatus, wherein the second information comprises information indicating a second precoding matrix, the second precoding matrix is a candidate precoding matrix to be used by the second apparatus to precode a second data flow, and there is an intersection set between a time domain resource of the first data flow and a time domain resource of the second data flow.

2. The method according to claim 1, wherein the first information further comprises a modulation and coding scheme corresponding to the first precoding matrix and/or rank indication information corresponding to the first precoding matrix; and/or
the second information further comprises a modulation and coding scheme corresponding to the second precoding matrix and/or rank indication information corresponding to the second precoding matrix.

3. The method according to claim 1 or 2, wherein bandwidth corresponding to the first precoding matrix is different from bandwidth corresponding to the second precoding matrix; or
a codebook level quantity corresponding to the first precoding matrix is different from a codebook level quantity corresponding to the second precoding matrix.

4. The method according to any one of claims 1 to 3, wherein a quantity of precoding resource block groups corresponding to the first precoding matrix is different from a quantity of precoding resource block groups corresponding to the second precoding matrix.

5. The method according to any one of claims 1 to 4, wherein the first information comprises information indicating a plurality of first precoding matrices, and at least two of the plurality of first precoding matrices are different; and/or
the second information comprises information indicating a plurality of second precoding matrices, and at least two of the plurality of second precoding matrices are different.

6. The method according to any one of claims 1 to 5, wherein the first precoding matrix is a precoding matrix in a first precoding matrix set, and the second precoding matrix is a precoding matrix in a second precoding matrix set; and
the first precoding matrix set is a subset of the second precoding matrix set.

7. The method according to any one of claims 1 to 6, wherein the first precoding matrix is a precoding matrix in the first precoding matrix set, and the second precoding matrix is a precoding matrix in the second precoding matrix set; and
a quantity of precoding matrices comprised in the first precoding matrix set is different from a quantity of precoding matrices comprised in the second precoding matrix set.

8. The method according to any one of claims 1 to 7, wherein the sending, by a first apparatus, first information to a second apparatus comprises:
receiving, by the first apparatus, first trigger information, wherein the first trigger information triggers the first apparatus to feed back information about the candidate precoding matrix of the first data flow; and
sending, by the first apparatus, the first information to the second apparatus based on the first trigger information.

9. The method according to any one of claims 1 to 8, wherein the sending, by the first apparatus, second information to the second apparatus comprises:
receiving, by the first apparatus, second trigger information, wherein the second trigger information triggers the first apparatus to feed back information about the candidate precoding matrix of the second data flow; and
sending, by the first apparatus, the second information to the second apparatus based on the second trigger information.

10. The method according to any one of claims 1 to 7, wherein the sending, by a first apparatus, first information to a second apparatus comprises:
periodically sending, by the first apparatus by using first duration as a periodicity, information indicating the candidate precoding matrix of the first data flow, wherein one piece of the information indicating the candidate precoding matrix of the first data flow is the first information.

11. The method according to any one of claims 1 to 7, wherein the sending, by the first apparatus, second information to the second apparatus comprises:
periodically sending, by the first apparatus by using second duration as a periodicity, information indicating the candidate precoding matrix of the second data flow, wherein one piece of the information indicating the candidate precoding matrix of the second data flow is the second information.

12. A communication method, comprising:
receiving, by a second apparatus, first information from a first apparatus, wherein the first information comprises information indicating a first precoding matrix, and the first precoding matrix is a candidate precoding matrix to be used by the second apparatus to precode a first data flow; and
receiving, by the second apparatus, second information from the first apparatus, wherein the second information comprises information indicating a second precoding matrix, the second precoding matrix is a candidate precoding matrix to be used by the second apparatus to precode a second data flow, and there is an intersection set between a time domain resource of the first data flow and a time domain resource of the second data flow.

13. The method according to claim 12, wherein the first information further comprises a modulation and coding scheme corresponding to the first precoding matrix and/or rank indication information corresponding to the first precoding matrix; and/or
the second information further comprises a modulation and coding scheme corresponding to the second precoding matrix and/or rank indication information corresponding to the second precoding matrix.

14. The method according to claim 12 or 13, wherein bandwidth corresponding to the first precoding matrix is different from bandwidth corresponding to the second precoding matrix; or
a codebook level quantity corresponding to the first precoding matrix is different from a codebook level quantity corresponding to the second precoding matrix.

15. The method according to any one of claims 12 to 14, wherein a quantity of precoding resource block groups corresponding to the first precoding matrix is different from a quantity of precoding resource block groups corresponding to the second precoding matrix.

16. The method according to any one of claims 12 to 15, wherein the first information comprises information indicating a plurality of first precoding matrices, and at least two of the plurality of first precoding matrices are different; and/or
the second information comprises information indicating a plurality of second precoding matrices, and at least two of the plurality of second precoding matrices are different.

17. The method according to any one of claims 12 to 16, wherein the first precoding matrix is a precoding matrix in a first precoding matrix set, and the second precoding matrix is a precoding matrix in a second precoding matrix set; and
the first precoding matrix set is a subset of the second precoding matrix set.

18. The method according to any one of claims 12 to 17, wherein the first precoding matrix is a precoding matrix in the first precoding matrix set, and the second precoding matrix is a precoding matrix in the second precoding matrix set; and
a quantity of precoding matrices comprised in the first precoding matrix set is different from a quantity of precoding matrices comprised in the second precoding matrix set.

19. The method according to any one of claims 12 to 18, wherein before the receiving, by a second apparatus, first information from a first apparatus, the method further comprises:
sending, by the second apparatus, first trigger information to the first apparatus, wherein the first trigger information triggers the first apparatus to feed back information about the candidate precoding matrix of the first data flow.

20. The method according to any one of claims 12 to 19, wherein before the receiving, by the second apparatus, second information from the first apparatus, the method further comprises:
sending, by the second apparatus, second trigger information to the first apparatus, wherein the second trigger information triggers the first apparatus to feed back information about the candidate precoding matrix of the second data flow.

21. The method according to any one of claims 12 to 18, wherein the receiving, by a second apparatus, first information from a first apparatus comprises:
periodically receiving, by the second apparatus by using first duration as a periodicity, information indicating the candidate precoding matrix of the first data flow, wherein one piece of the information indicating the candidate precoding matrix of the first data flow is the first information.

22. The method according to any one of claims 12 to 18, wherein the receiving, by the second apparatus, second information from the first apparatus comprises:
periodically receiving, by the second apparatus by using second duration as a periodicity, information indicating the candidate precoding matrix of the second data flow, wherein one piece of the information indicating the candidate precoding matrix of the second data flow is the second information.

23. A communication method, comprising:
receiving, by a first apparatus, third information from a second apparatus; and
receiving, by the first apparatus, a first data flow and a second data flow from the second apparatus based on the third information, wherein there is an intersection set between a time domain resource of the first data flow and a time domain resource of the second data flow, wherein
the third information comprises at least one of the following content:
information indicating a time-frequency resource occupied by the first data flow;
information indicating a modulation and coding scheme of the first data flow;
location indication information indicating a location of data of the first apparatus in the first data flow; or
a demodulation reference signal DMRS port corresponding to the first data flow.

24. The method according to claim 23, wherein the first data flow comprises the data of the first apparatus;
the location indication information comprises group identification information of a logical bit group corresponding to the data of the first apparatus; and
the logical bit group comprises one or more consecutive logical bits, and the logical bit group has a mapping relationship with one physical bit, a plurality of consecutive physical bits, or a plurality of inconsecutive physical bits.

25. The method according to either claim 23 or claim 24, wherein the third information further comprises:
identification information indicating a layer onto which a codeword corresponding to data of the first data flow is mapped.

26. The method according to any one of claims 23 to 25, wherein the data of the first data flow corresponds to one or more codewords, and/or one of the one or more codewords corresponding to the data of the first data flow is mapped onto one or more layers.

27. The method according to any one of claims 23 to 26, wherein data of the second data flow corresponds to one or more codewords, and/or one of the one or more codewords of the second data flow is mapped onto one or more layers.

28. The method according to any one of claims 23 to 27, wherein the codeword corresponding to the data of the first data flow is different from the codeword corresponding to the data of the second data flow; and/or
the layer onto which the codeword corresponding to the data of the first data flow is mapped is different from a layer onto which the codeword corresponding to the data of the second data flow is mapped.

29. The method according to any one of claims 23 to 28, wherein the method further comprises:
receiving, by the first apparatus, fourth information from the second apparatus, wherein
the fourth information comprises at least one of the following content:
information indicating a time-frequency resource occupied by the second data flow;
information indicating a modulation and coding scheme of the second data flow;
information indicating a DMRS port corresponding to the second data flow; or
identification information indicating a layer onto which a codeword corresponding to the data of the first apparatus in the second data flow is mapped.

30. The method according to any one of claims 23 to 29, wherein the method further comprises:
receiving, by the first apparatus, information that is from the second apparatus and that indicates that the first data flow comprises the data of the first apparatus; and
obtaining, by the first apparatus, the data of the first apparatus from the first data flow based on the indication that the first data flow comprises the data of the first apparatus.

31. The method according to any one of claims 23 to 29, wherein the method further comprises:
receiving, by the first apparatus, first downlink control information DCI; and
when determining that the first DCI is scrambled by using a first radio network temporary identifier RNTI, determining, by the first apparatus, that the first data flow comprises the data of the first apparatus.

32. The method according to any one of claims 23 to 29, wherein the method further comprises:
receiving, by the first apparatus, first DCI; and
when determining that the first DCI is scrambled by using a second RNTI, determining, by the first apparatus, that the first data flow does not comprise the data of the first apparatus.

33. The method according to any one of claims 23 to 32, wherein the receiving, by the first apparatus, a first data flow and a second data flow from the second apparatus based on the third information comprises:
receiving, by the first apparatus, a target data flow from the second apparatus based on the third information, wherein the target data flow comprises the first data flow; and
the method further comprises:
receiving, by the first apparatus, information that is from the second apparatus and that indicates that the target data flow comprises the second data flow, wherein the second data flow is a data flow of the first apparatus; and
obtaining, by the first apparatus, data of the second data flow from the target data flow based on the information indicating that the target data flow comprises the second data flow.

34. The method according to any one of claims 23 to 32, wherein the receiving, by the first apparatus, a first data flow and a second data flow from the second apparatus based on the third information comprises:
receiving, by the first apparatus, a target data flow from the second apparatus based on the third information, wherein the target data flow comprises the first data flow; and
the method further comprises:
receiving, by the first apparatus, second DCI; and
when determining that the second DCI is scrambled by using a third RNTI, determining, by the first apparatus, that the target data flow comprises information about the second data flow.

35. A communication method, comprising:
sending, by a second apparatus, third information to a first apparatus; and
sending, by the second apparatus, a first data flow and a second data flow to the first apparatus, wherein there is an intersection set between a time domain resource of the first data flow and a time domain resource of the second data flow, wherein
the third information comprises at least one of the following content:
information indicating a time-frequency resource occupied by the first data flow;
information indicating a modulation and coding scheme of the first data flow;
location indication information indicating a location of data of the first apparatus in the first data flow; or
a demodulation reference signal DMRS port corresponding to the first data flow.

36. The method according to claim 35, wherein the first data flow comprises the data of the first apparatus;
the location indication information comprises group identification information of a logical bit group corresponding to the data of the first apparatus; and
the logical bit group comprises one or more consecutive logical bits, and the logical bit group has a mapping relationship with one physical bit, a plurality of consecutive physical bits, or a plurality of inconsecutive physical bits.

37. The method according to either claim 35 or claim 36, wherein the third information further comprises:
identification information indicating a layer onto which a codeword corresponding to data of the first data flow is mapped.

38. The method according to any one of claims 35 to 37, wherein the data of the first data flow corresponds to one or more codewords, and/or one of the one or more codewords corresponding to the data of the first data flow is mapped onto one or more layers.

39. The method according to any one of claims 35 to 38, wherein data of the second data flow corresponds to one or more codewords, and/or one of the one or more codewords of the second data flow is mapped onto one or more layers.

40. The method according to any one of claims 35 to 39, wherein the codeword corresponding to the data of the first data flow is different from the codeword corresponding to the data of the second data flow; and/or
the layer onto which the codeword corresponding to the data of the first data flow is mapped is different from a layer onto which the codeword corresponding to the data of the second data flow is mapped.

41. The method according to any one of claims 35 to 40, wherein the method further comprises:
sending, by the second apparatus, fourth information to the first apparatus, wherein
the fourth information comprises at least one of the following content:
information indicating a time-frequency resource occupied by the second data flow;
information indicating a modulation and coding scheme of the second data flow;
information indicating a DMRS port corresponding to the second data flow; or
identification information indicating a layer onto which a codeword corresponding to the data of the first apparatus in the second data flow is mapped.

42. The method according to any one of claims 35 to 41, wherein the method further comprises:
sending, by the second apparatus to the first apparatus, information indicating that the first data flow comprises the data of the first apparatus.

43. The method according to any one of claims 35 to 41, wherein the method further comprises:
sending, by the second apparatus, first downlink control information DCI to the first apparatus, wherein the first DCI is scrambled by using a first radio network temporary identifier RNTI, and the first RNTI indicates that the first data flow comprises the data of the first apparatus.

44. The method according to any one of claims 35 to 41, wherein the method further comprises:
sending, by the second apparatus, first DCI to the first apparatus, wherein the first DCI is scrambled by using a second RNTI, and the second RNTI indicates that the first data flow does not comprise the data of the first apparatus.

45. The method according to any one of claims 35 to 44, wherein the sending, by the second apparatus, a first data flow and a second data flow to the first apparatus comprises:
sending, by the second apparatus, a target data flow to the first apparatus, wherein the target data flow comprises the first data flow; and
the method further comprises:
sending, by the second apparatus to the first apparatus, information indicating that the target data flow comprises the second data flow, wherein the second data flow is a data flow of the first apparatus.

46. The method according to any one of claims 35 to 44, wherein the sending, by the second apparatus, a first data flow and a second data flow to the first apparatus comprises:
sending, by the second apparatus, a target data flow to the first apparatus, wherein the target data flow comprises the first data flow; and
the method further comprises:
sending, by the second apparatus, second DCI to the first apparatus, wherein the second DCI is scrambled by using a third RNTI, and the third RNTI indicates that the target data flow comprises information of the second data flow.

47. A communication apparatus, comprising a communication interface and at least one processor, wherein the communication interface and the at least one processor are interconnected through a line;
the communication interface is configured to input and/or output signaling or data; and
the processor is configured to execute a computer-executable program, so that the method according to any one of claims 1 to 46 is performed.

48. A communication apparatus, comprising a processor and a memory, wherein
the memory is configured to store a computer program or instructions; and
the processor is configured to execute the computer program or the instructions in the memory, so that the method according to any one of claims 1 to 46 is performed.

49. A communication apparatus, comprising a processing unit and a communication unit, wherein the processing unit is configured to perform the method according to any one of claims 1 to 46 through the communication unit.

50. A computer-readable storage medium, wherein the computer-readable storage medium stores computer-executable instructions, and when the computer-executable instructions are invoked by a computer, the method according to any one of claims 1 to 46 is performed.

51. A chip system, wherein the chip system comprises at least one processor and an interface circuit, the interface circuit and the at least one processor are interconnected through a line, and the processor runs instructions, to perform the method according to any one of claims 1 to 46.

52. A computer program product, wherein the computer program product stores a computer program, the computer program comprises program instructions, and when the program instructions are executed by a computer, the computer is enabled to perform the method according to any one of claims 1 to 46.
